# EUROPÄISCHE PATENTSCHRIFT

(11) **EP 3 152 880 B1**
(45) Veröffentlichungstag und Bekanntmachung des Hinweises auf die Patenterteilung: **09.12.2020**
(21) Anmeldenummer: 15727937.3
(22) Anmeldetag: 01.06.2015
(51) Int. Cl.: H04L 29/06

(54) **VERFAHREN ZUR KOMMUNIKATION ZWISCHEN ABGESICHERTEN COMPUTERSYSTEMEN, COMPUTERNETZ-INFRASTRUKTUR SOWIE COMPUTERPROGRAMM-PRODUKT**
METHOD FOR COMMUNICATION BETWEEN SECURED COMPUTER SYSTEMS, COMPUTER NETWORK INFRASTRUCTURE AND COMPUTER PROGRAM PRODUCT
PROCÉDÉ DE COMMUNICATION ENTRE DES SYSTÈMES INFORMATIQUES SÉCURISÉS, INFRASTRUCTURE DE RÉSEAU D'ORDINATEURS AINSI QUE PRODUIT-PROGRAMME D'ORDINATEUR

(30) Priorität: 03.06.2014 DE 102014107790; 29.08.2014 DE 102014112466
(43) Veröffentlichungstag der Anmeldung: 12.04.2017
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2015/062155
(87) Internationale Veröffentlichungsnummer: WO 2015/185507

(56) Entgegenhaltungen:
- WO-A1-2008/004248
- DE-B3-102004 034 902
- US-A1- 2004 088 409
- SECHANG SON ET AL: "CODO: firewall traversal by cooperative on-demand opening", HIGH PERFORMANCE DISTRIBUTED COMPUTING, 2005. HPDC-14. PROCEEDINGS. 14 TH IEEE INTERNATIONAL SYMPOSIUM ON RESEARCH TRIANGLE PARK, NC, USA JULY 24-27, 2005, PISCATAWAY, NJ, USA,IEEE, 24. Juli 2005 (2005-07-24), Seiten 233-242, XP010843427, DOI: 10.1109/HPDC.2005.1520965 ISBN: 978-0-7803-9037-9
- FAKARIAH HANI MOHD ALI ET AL: "Simple port knocking method: Against TCP replay attack and port scanning", CYBER SECURITY, CYBER WARFARE AND DIGITAL FORENSIC (CYBERSEC), 2012 INTERNATIONAL CONFERENCE ON, IEEE, 26 June 2012 (2012-06-26), pages 247-252, XP032207595, DOI: 10.1109/CYBERSEC.2012.6246118 ISBN: 978-1-4673-1425-1

## Beschreibung

Die Erfindung betrifft ein Verfahren zur Kommunikation zwischen abgesicherten Computersystemen in einer Computernetz-Infrastruktur, eine entsprechende Computernetz-Infrastruktur sowie ein Computerprogramm-Produkt zur Durchführung eines derartigen Verfahrens.

Verteilte Rechnernetze bzw. so genannte Computernetz-Infrastrukturen beschreiben eine Mehrzahl von Computersystemen, die über Datenverbindungen miteinander kommunizieren können. Dabei werden zum Teil vertrauliche Inhalte ausgetauscht, auf die nicht-autorisierte Personen keine Zugriffsmöglichkeit haben sollen. Insbesondere in Computernetz-Infrastrukturen, welche Server-Client-Topologien umfassen, werden vertrauliche Daten, z. B. Kundendaten oder Benutzerdaten, zwischen dem Client und dem Server ausgetauscht, wobei ein Zugriff Dritter auf diese Daten unterbunden werden muss.

Herkömmliche Sicherheitsstrategien zur Erhöhung des Datenschutzes umfassen Vorschriften (Prozesse, die eingehalten werden sollen) oder Regeln (Gebote bzw. Verbote) für dritte Personen, beispielsweise Administratoren, wodurch nur ein eingeschränkter beziehungsweise kontrollierter Zugriff auf vertrauliche Daten möglich sein soll.

Andererseits sind technische Maßnahmen an beziehungsweise in den Computersystemen vorgesehen, welche eine physischen und/oder logischen Zugriff auf Computersysteme verhindern beziehungsweise auf autorisierte Personen einschränken sollen.

Derartige Ansätze zur Verbesserung des Datenschutzes sind zur Datensicherheit zwar förderlich, haben jedoch den Nachteil, dass sie in der Regel keine zwingenden Maßnahmen darstellen, um einen Zugriff auf vertrauliche Daten zu unterbinden. Ferner arbeiten gängige Computernetz-Infrastrukturen für den Datenaustausch beziehungsweise zur Kommunikation untereinander mit Zugangsmöglichkeiten, beispielsweise über Netzwerk, beziehungsweise Möglichkeiten der Ansprechbarkeit von Diensten in den Computersystemen, welche die Computersysteme empfindlich gegen Angriffe von außen machen. Denn zu einer Ansprechbarkeit von Diensten ist ein laufendes Programm an einem oder mehreren Netzwerk-Ports eines Computersystems erforderlich. Dieses laufende Programm stellt eine potenzielle Sicherheitslücke für Angriffe von außen über Netzwerk dar.

Die Veröffentlichung "Fakariah Hani Mohd Ali et al.,: Simple Port Knocking Method, Against TCP Replay Attack and Port Scanning", veröffentlicht in International Conference on Cyber Security, Cyber Warfare and Digital Forensic (CyberSec), Juni 2012, zeigt ein Port-Knocking-Verfahren zum Authentifizieren eines Benutzersystems (Client) an einem Server-Netzwerk, wobei bei erfolgreichem Authentifizieren ein Dienst an einem Server gestartet und ein entsprechender Netzwerk-Port geöffnet wird, so dass der Client eine Verbindung zum Server-Netzwerk aufbauen und auf einen gestarteten Dienst zugreifen kann.

WO 2008/004248 A1 zeigt eine Computernetz-Infrastruktur mit einem "Phantomserver", der über entsprechende Schaltmittel entweder mit einem Organisationsnetzwerk oder mit einem weiteren Netzwerk verbunden werden kann.

Bei den herkömmlichen Lösungen besteht eine Gefahr darin, dass unter Umständen ein Angreifer (Cracker), der sich Zugang zu einem Computersystem verschafft, den Angriff über weitere Computersysteme in der Computernetz-Infrastruktur hinweg ausbreitet und auf andere Computersysteme fortsetzen kann. Andererseits bedarf es in einer Computernetz-Infrastruktur zur Kommunikation und Verarbeitung von Informationen zwischen einzelnen Computersystemen notwendiger Kommunikationsstrukturen.

Die Aufgabe der vorliegenden Erfindung besteht darin, durch technische Maßnahmen den Schutz vor Angriffen auf Computersysteme in einer Computernetz-Infrastruktur zu verbessern, Auswirkungen bzw. ein Ausbreiten von Angriffen auf verteilte Computersysteme innerhalb der Computernetz-Infrastruktur möglichst gering zu halten und dennoch eine Kommunikationsstruktur vorzuschlagen, welche eine zufriedenstellende und sichere Weiterleitung von Daten innerhalb der Computernetz-Infrastruktur, insbesondere eine Event-Steuerung einzelner Computersysteme, gewährleistet.

In einem ersten Aspekt wird diese Aufgabe durch ein Verfahren zur Kommunikation zwischen abgesicherten Computersystemen in einer Computernetz-Infrastruktur nach Anspruch 1 gelöst.

Bei dem Verfahren werden Daten-Pakete zwischen mehreren aus einer Gruppe von Bearbeitungs-Computersystemen übertragen, wobei eine derartige Übertragung vermittels zumindest eines Vermittlungs-Computersystems durchgeführt wird. Die Daten-Pakete werden über zumindest ein Relay-System geleitet, das dem Vermittlungs-Computersystem in einem Übertragungsweg der Daten-Pakete vor- oder nachgeschaltet ist.

Vorteilhaft halten alle aus der Gruppe der Bearbeitungs-Computersysteme vorbestimmte, für dieses Verfahren verwendete Netzwerk-Ports dauerhaft während der Durchführung des Verfahrens derart geschlossen, dass kein Verbindungsaufbau von außen zugelassen wird und somit ein Zugriff auf ein jeweiliges Bearbeitungs-Computersystem über ein Netzwerk vermittels dieser Netzwerk-Ports verhindert wird. Das Relay-System hält vorteilhaft zumindest gegenüber dem Vermittlungs-Computersystem, dem das Relay-System vor- oder nachgeschaltet ist, vorbestimmte, für dieses Verfahren verwendete Netzwerk-Ports dauerhaft während der Durchführung des Verfahrens derart geschlossen, dass zumindest vom Vermittlungs-Computersystem aus kein Verbindungsaufbau zum Relay-System zugelassen wird und somit ein entsprechender Zugriff auf das Relay-System über ein Netzwerk vermittels dieser Netzwerk-Ports verhindert wird. Allerdings baut ein Bearbeitungs-Computersystem oder das Relay-System ggf. eine Verbindung zum Vermittlungs-Computersystem auf, um ein Daten-Paket im Vermittlungs-Computersystem abzulegen oder von dort abzuholen.

Bei einem derartigen Kommunikationsverfahren dienen die Bearbeitungs-Computersysteme zum gegenseitigen Übertragen und Bearbeiten von Daten-Paketen. Eine Bearbeitung der Daten-Pakete erfolgt dabei lokal in einem jeweiligen Bearbeitungs-Computersystem. Die Daten-Pakete werden von einem sendenden Bearbeitungs-Computersystem innerhalb der Computernetz-Infrastruktur über zumindest ein Vermittlungs-Computersystem sowie zumindest ein Relay-System an ein empfangendes Bearbeitungs-Computersystem geleitet. Das Relay-System ist dem Vermittlungs-Computersystem in einem Übertragungsweg der Daten-Pakete entweder vor- oder nachgeschaltet.

Das Vermittlungs-Computersystem dient als Vermittler der Daten-Pakete, wobei die Daten-Pakete zur Weiterleitung entlang eines Übertragungswegs innerhalb der Computernetz-Infrastruktur auf dem Vermittlungs-Computersystem abgelegt und von dort zum Weitertransport abgeholt werden können.

Auch das Relay-System führt (wie das Vermittlungs-Computersystem) ein Weiterleiten von Daten-Paketen innerhalb der Computernetz-Infrastruktur durch. Der Begriff "Relay-System" soll im Kontext dieses Verfahrens verstanden werden als Weiterleitungs-System, welches als Relay-Server, ggf. modifizierter Router usw. ausgeführt sein kann. Eine Hauptfunktionalität des Relay-Systems besteht in einer Konstellation des hier dargestellten Verfahrens vorteilhaft darin, dass das Relay-System ein Daten-Paket, welches das Relay-System von einem Vermittlungs-Computersystem erhält bzw. von einem Vermittlungs-Computersystem abholt, dem das Relay-System nachgeschaltet ist, unmittelbar an ein weiteres Computersystem innerhalb der Computernetz-Infrastruktur überträgt. In einer alternativen oder ergänzenden Konstellation des hier dargestellten Verfahrens besteht die Hauptfunktionalität des Relay-Systems vorteilhaft darin, dass das Relay-System ein Daten-Paket, welches das Relay-System von einem weiteren Computersystem erhält bzw. von einem weiteren Computersystem abholt, dem das Relay-System nachgeschaltet ist, unmittelbar an ein Vermittlungs-Computersystem innerhalb der Computernetz-Infrastruktur überträgt, welches wiederum dem Relay-System nachgeschaltet ist.

Bei dem hier erläuterten Verfahren verhalten sich alle aus der Gruppe der Bearbeitungs-Computersysteme als eingekapselte Systeme mit geschlossenen Netzwerk-Ports. Ein Zugriff über ein Netzwerk auf diese Computersysteme ist zumindest unter bestimmten Betriebsbedingungen (vorteilhaft dauerhaft während der Durchführung des hier erläuterten Verfahrens) nicht oder nur deutlich erschwert möglich.

Der Begriff "vorbestimmte Netzwerk-Ports" bedeutet, dass in jedem Bearbeitungs-Computersystem sämtliche oder nur ausgewählte sicherheitskritische Netzwerk-Ports, z.B. die für dieses Verfahren verwendeten Netzwerk-Ports, dauerhaft oder vorübergehend geschlossen sind.

Dies hat den Vorteil, dass auf den Bearbeitungs-Computersystemen keine Programme oder Dienste eingerichtet, gestartet bzw. notwendig sind, die zum Zweck der Ansprechbarkeit bzw. des Verbindungsaufbaus von außen die entsprechenden Netzwerk-Ports abhören (sogenanntes "listening") und somit eine potenzielle Sicherheitslücke (z. B. durch Buffer-Overflow oder so genannte Denial-of-Service-Attacken) bilden. Somit bedeutet der Begriff "geschlossene Netzwerk-Ports" in diesem Kontext, dass diese keine "listening ports" sind, d.h. kein Verbindungsaufbau von außen zugelassen wird. Ein Dritter (Cracker) ist in diesem Fall nicht in der Lage, sich von außen über Netzwerk an einem jeweiligen Bearbeitungs-Computersystem zu authentifizieren oder einzuloggen, z. B. bei Unix-basierten Systemen über einen Secure-Shell-(SSH-) Daemon, oder spezielle Aktionen auf einem Bearbeitungs-Computersystem durchzuführen.

Allerdings kann für eine entsprechende Benutzergruppe ein lokaler Zugriff auf ein jeweiliges Bearbeitungs-Computersystem eingerichtet sein (z. B. für ein Sicherheitspersonal). Für andere Dritte wird jedoch ein lokaler Zugriff auf ein entsprechendes Bearbeitungs-Computersystem verhindert.

Auch das Relay-System verhält sich zumindest gegenüber dem Vermittlungs-Computersystem, dem das Relay-System verfahrensgemäß vor- oder nachgeschaltet ist, als eingekapseltes System mit geschlossenen Netzwerk-Ports der erläuterten Art. Somit ist auch ein Zugriff über ein Netzwerk auf das Relay-System (zumindest vom nach- bzw. vorgeschalteten Vermittlungs-Computersystem aus) zumindest unter bestimmten Betriebsbedingungen (vorteilhaft ebenfalls dauerhaft während der Durchführung des hier erläuterten Verfahrens) nicht möglich. Auch im Relay-System können sämtliche oder nur ausgewählte sicherheitskritische Netzwerk-Ports dauerhaft oder vorübergehend geschlossen sein.

Durch die Abschottung der Bearbeitungs-Computersysteme bzw. des Relay-Systems gemäß der erläuterten Art und Weise ist somit ein Angriff über Netzwerk erschwert, weil eine entscheidende Angriffsmöglichkeit, nämlich laufende Dienste oder Programme an geöffneten ("listening") Netzwerk-Ports der jeweiligen Systeme unterbunden wird.

Eine Abschottung des Relay-Systems erschwert zudem eine Ausbreitung eines Angriffs in einem Übertragungsweg von dem Relay-System vorgelagerten Computersystemen auf dem Relay-System nachgelagerte Computersysteme. Das Relay-System bildet gewissermaßen eine Sicherheitshürde oder Blockade, wobei mangels eines ansprechbaren Programms oder Dienstes an den geschlossenen Netzwerk-Ports des Relay-Systems ein (unbefugter) Zugriff auf das Relay-System und/oder in einem entsprechenden Übertragungsweg nachgelagerte Computersysteme deutlich erschwert wird. Das Relay-System dient bei dem erläuterten Verfahren somit als eine Art "Router", der aber im Gegensatz zu herkömmlichen Routern oder Routing-Systemen keinerlei Verbindungsaufbau an den geschlossenen Netzwerk-Ports über Netzwerk von außen zulässt. Somit bildet das Relay-System einen wirksamen Schutz vor unberechtigtem Eindringen. Das Relay-System kann also vor diesem Hintergrund als "Anti-Router" bezeichnet werden.

Auf diese Weise sind bei dem erläuterten Verfahren insbesondere sicherheitskritische Daten, welche lokal auf den jeweiligen Bearbeitungs-Computersystemen verarbeitet werden, gegen Angriffe auf die Bearbeitungs-Computersysteme geschützt. Zusätzlich verhindert bzw. blockiert das Relay-System eine Ausbreitung eines Angriffs auf verteilte Computersysteme innerhalb der Computernetz-Infrastruktur.

Zur Kommunikation und Weiterleitung von Daten-Paketen innerhalb der Computernetz-Infrastruktur erlaubt das Verfahren im Unterschied zu den Bearbeitungs-Computersystemen und dem Relay-System jedoch einen Zugriff auf das zumindest eine Vermittlungs-Computersystem von außen. Das Vermittlungs-Computersystem ist als "offenes" System mit wenigstens einem ansprechbaren offenen ("listening") Netzwerk-Port über Netzwerk zugänglich. Das bedeutet, dass auf dem Vermittlungs-Computersystem beispielsweise Programme laufen und/oder Applikationen vorbereitet sind, sodass ein Bearbeitungs-Computersystem oder das zumindest eine Relay-System jeweils auf das Vermittlungs-Computersystem zugreifen können und eine Verbindung zum Vermittlungs-Computersystem aufbauen können, um ein Daten-Paket gemäß den vorgestellten Verfahren (über eine dann aufgebaute Verbindung, "established") im Vermittlungs-Computersystem abzulegen oder von dort abzuholen. Unter Sicherheitsaspekten ist ein solches "offenes" Vermittlungs-Computersystem ähnlich zu bewerten wie ein traditionelles, speziell abgesichertes Computersystem.

Somit dient das zumindest eine Vermittlungs-Computersystem als (abgesicherter, aber ansprechbarer) Vermittler für eine Kommunikation zwischen den Bearbeitungs-Computersystemen und dem Relay-System, welche jedoch selbst eingekapselt sind.

Daten-Pakete können im Kontext des hier erläuterten Verfahrens vorteilhaft Informationen zur Ausführung vorbestimmter Prozesse in einem entsprechenden Bearbeitungs-Computersystem umfassen. Derartige Prozesse können z. B. sein:
- das Speichern und/oder Verarbeiten von übertragenen Daten,
- der Neustart eines Programms,
- das Wiederherstellen von Backup-Daten oder
- die Anweisung zu einem physischen Zugang oder einen SSH-Zugriff auf ein Bearbeitungs-Computersystem.

Ein abgesicherter Zugriff auf ein Bearbeitungs-Computersystem vermittels des hier erläuterten Verfahrens wird weiter unten in einem speziellen Aspekt näher erläutert.

Entsprechende Kombinationen der genannten Prozesse, Aktionen und Anweisungen sind natürlich denkbar. Daten-Pakete können entlang eines Übertragungsweges zwischen Bearbeitungs-Computersystemen innerhalb der Computernetz-Infrastruktur um bestimmte Informationen ergänzt werden, sodass eine Event-Steuerung eines Ziel-Bearbeitungs-Computersystems bzw. eine Informationsweitergabe zwischen Bearbeitungs-Computersystemen sowie ein flexibles Hinzufügen von Informationen während des Prozesses zu dessen Steuerung ermöglicht ist.

Daten-Pakete unterscheiden sich bei dem erläuterten Verfahren grundlegend von einem reinen Kommando-Befehl eines Bearbeitungs-Computersystems an ein anderes Bearbeitungs-Computersystem, weil ein Kommando-Befehl zu dessen Auswertung auf Seiten des empfangenden Bearbeitungs-Computersystems ein kontinuierlich laufendes, nach außen offenes und damit angreifbares Programm oder einen entsprechenden Dienst notwendig macht. Ein derartiges Programm bzw. ein entsprechender Dienst entfällt jedoch, wie bereits erläutert, beim vorliegenden Verfahren mangels eines Zugriffs über Netzwerk auf geöffnete ("listening") Netzwerk-Ports eines entsprechenden Bearbeitungs-Computersystems. Entsprechendes gilt in Bezug auf das Relay-System der hier erläuterten Computernetz-Infrastruktur.

Zum Übertragen von Daten-Paketen auf ein Bearbeitungs-Computersystem oder auf das Relay-System kann ein Prozess angestoßen werden, welcher ein ausgewähltes Daten-Paket im Vermittlungs-Computersystem aufruft und automatisiert vom Vermittlungs-Computersystem auf ein Bearbeitungs-Computersystem oder das Relay-System überträgt. Vorteilhaft ist das automatisierte Übertragen von Daten-Paketen vom Vermittlungs-Computersystem auf ein Bearbeitungs-Computersystem oder das Relay-System so ausgestaltet, dass ein Dritter von außen darauf keine Einflussmöglichkeiten hat und somit eine Gefahr für Manipulationen eines der Bearbeitungs-Computersysteme oder des Relay-Systems über Daten-Pakete ausgeschlossen ist. Zum Beispiel können Daten-Pakete verschlüsselt sein. Eine (unterschiedliche) Verschlüsselung kann auch mehrfach auf Teile der Daten-Pakete oder auf die gesamten Daten-Pakete angewandt werden. Im jeweiligen empfangenden Computersystem kann die Gültigkeit von Daten-Paketen überprüft werden und ein entsprechender Prozess ausgeführt werden. Die Gültigkeit der Daten-Pakete kann anhand von Signaturen überprüft werden, mit denen die Daten-Pakete signiert worden sind.

In einer denkbaren Konstellation ist das Relay-System in einem Übertragungsweg von Daten-Paketen einem Bearbeitungs-Computersystem unmittelbar (d.h. ohne zwischengeschaltetes weiteres Vermittlungs-Computersystem) vor- oder nachgeschaltet. In diesem Fall hat das Relay-System zu diesem Bearbeitungs-Computersystem hin zumindest einen Netzwerk-Port geöffnet, so dass dieses Bearbeitungs-Computersystem eine Verbindung zum Relay-System aufbauen kann, um ein Daten-Paket im Relay-System abzulegen oder von dort abzuholen. Dies ist notwendig, damit überhaupt eine Kommunikation zwischen dem seinerseits abgeschotteten Bearbeitungs-Computersystem (mit geschlossenen Netzwerk-Ports) und dem Relay-System möglich ist. Zu weiteren Vermittlungs-Computersystemen hin hält das Relay-System in einem Übertragungsweg von Daten-Paketen jedoch, wie oben erläutert, maßgebliche Netzwerk-Ports geschlossen. In dieser Konstellation ist das Relay-System somit ein gemischt geöffnetes und geschlossenes System bzw. ein "hybrides" System.

Vorteilhaft ist bei dem Verfahren der erläuterten Art gemäß einer anderen Konstellation das Relay-System, über das die Daten-Pakete geleitet werden, zwei Vermittlungs-Computersystemen im Übertragungsweg der Daten-Pakete zwischengeschaltet, wobei das Relay-System zumindest gegenüber einem (oder gegenüber beiden) der Vermittlungs-Computersysteme, denen das Relay-System zwischengeschaltet ist, vorbestimmte, für dieses Verfahren verwendete Netzwerk-Ports im erläuterten Sinn geschlossen hält. Bei einem derartigen Kommunikationsverfahren werden somit zumindest zwei Vermittlungs-Computersysteme vorgehalten, wobei eines im Übertragungsweg von Daten-Paketen vor dem Relay-System und eines nach dem Relay-System eingerichtet ist. Im Falle eines Schließens von Netzwerk-Ports gegenüber sämtlichen vor- sowie nachgeschalteten Vermittlungs-Computersystemen bildet das Relay-System eine Routing-Funktionalität, lässt jedoch keinerlei Verbindungsaufbau von außen über Netzwerk zu. Das Relay-System bildet also in sämtlichen Übertragungsrichtungen (ausgehend von sämtlichen beteiligten Vermittlungs-Computersystemen) einen wirksamen Schutz vor unberechtigtem Eindringen.

Daten-Pakete werden in der Computernetz-Infrastruktur im Allgemeinen anhand eines Übertragungsprotokolls zwischen den Computersystemen übertragen. Dabei ergeben sich bei der hier erläuterten Topologie von Relay-Systemen bzw. Bearbeitungs-Computersystemen mit in einer oder mehreren Übertragungsrichtungen geschlossenen Netzwerk-Ports und Vermittlungs-Computersystemen mit ansprechbaren ("listening") Netzwerk-Ports unterschiedliche Auswirkungen je nachdem, ob ein Daten-Paket an ein Computersystem geschickt wird (wie im Falle einer Übertragung von einem Bearbeitungs-Computersystem oder Relay-System auf ein ansprechbares Vermittlungs-Computersystem) oder ob ein Daten-Paket von einem Computersystem abgeholt wird (wie im Falle einer Übertragung von einem ansprechbaren Vermittlungs-Computersystem auf ein Bearbeitungs-Computersystem oder Relay-System). Das bedeutet, dass sich die verschiedenen Szenarien eines "Holens" eines Daten-Paketes und eines "Schickens" eines Daten-Paketes im Übertragungsprotokoll unterschiedlich darstellen. Ein Angriff auf ein Übertragungsprotokoll macht somit die Manipulation unterschiedlicher Sicherheitsaspekte für die unterschiedlichen Szenarien notwendig, was die Sicherheit erhöht.

Zur weiteren Erhöhung der Sicherheit werden die Daten-Pakete bevorzugt
- im Übertragungsweg vor dem Relay-System anhand wenigstens eines ersten Übertragungsprotokolls übertragen und
- im Übertragungsweg nach dem Relay-System anhand wenigstens eines zweiten Übertragungsprotokolls übertragen, welches sich von dem wenigstens einen ersten Übertragungsprotokoll unterscheidet.

Dadurch ist ein weiterer Sicherheitsmechanismus geschaffen, welcher verhindert, dass Sicherheitsprobleme in einem einzigen Übertragungsprotokoll ein Versagen des Sicherheitsmechanismus bedeutet können. Vielmehr müssen für einen Übertragungsweg zwischen Bearbeitungs-Computersystemen vermittels des zumindest einen Vermittlungs-Computersystems und des zumindest einen Relay-Systems für einen erfolgreichen Angriff mehrere unterschiedliche Übertragungsprotokolle angegriffen werden bzw. angreifbar sein, was deutlich unwahrscheinlicher bzw. mühsamer ist als ein Angriff auf ein einziges Übertragungsprotokoll. Damit ist eine größere Sicherheit gewährleistet als die Verwendung nur eines einzigen Übertragungsprotokolls.

Somit stellt ein Relay-System gemäß dem erläuterten Verfahren nicht nur eine Sicherheitshürde aufgrund einer Nichtzulassung eines Verbindungsaufbaus von außen über Netzwerk dar (Abblocken von Angriffen über das Relay-System hinaus), sondern vereitelt zudem einen Angriff auf ein bestimmtes Übertragungsprotokoll im Übertragungsweg vor dem Relay-System durch Wechsel auf ein anderes unterschiedliches Übertragungsprotokoll im weiteren Übertragungsweg nach dem Relay-System. Optional können bei dem Verfahren der erläuterten Art durch entsprechenden Einsatz mehrerer Relay-Systeme mehr als zwei unterschiedliche Protokolle (pro Übertragungsrichtung) verwendet werden.

Es ist alternativ oder zusätzlich zu den oben erläuterten Maßnahmen bei dem Verfahren denkbar, dass die Daten-Pakete im jeweiligen Übertragungsweg zwischen zwei Bearbeitungs-Computersystemen richtungsabhängig über unterschiedliche Übertragungsprotokolle übertragen werden. Das bedeutet, dass bezüglich eines jeweiligen Bearbeitungs-Computersystems nicht nur ein Protokollwechsel von einem ersten Übertragungsprotokoll vor einem Relay-System auf ein zweites Übertragungsprotokoll nach einem Relay-System erfolgt, sondern auch für unterschiedliche Übertragungsrichtungen über das Relay-System hinweg unterschiedliche Übertragungsprotokolle verwendet werden.

Bei einem Relay-System können somit vier unterschiedliche Übertragungsprotokolle eingesetzt werden, je ein Übertragungsprotokoll vor und nach dem Relay-System pro Übertragungsrichtung über das Relay-System hinweg. Beispielsweise werden bezüglich eines Bearbeitungs-Computersystems ein Sende-Protokoll S1 vor dem Relay-System und ein Sende-Protokoll S2 nach dem Relay-System, sowie ein Empfangs-Protokoll E1 vor dem Relay-System und ein Empfangs-Protokoll E2 nach dem Relay-System unterschieden.

Es ist alternativ oder zusätzlich auch denkbar, Übertragungsprotokolle hinsichtlich der Tatsache zu unterscheiden, ob Daten-Pakete unmittelbar auf ein Vermittlungs-Computersystem (zu welchem von außen ein Verbindungsaufbau möglich ist) übertragen werden, oder von einem Bearbeitungs-Computersystem oder dem zumindest einen Relay-System aus (zu welchen von außen kein Verbindungsaufbau möglich ist) erst mittelbar, nach einem Verbindungsaufbau zum Vermittlungs-Computersystem hin, abgeholt werden.

Vorteilhaft werden bei dem Verfahren der erläuterten Art die Daten-Pakete
- im Übertragungsweg vor dem/einem Relay-System vermittels wenigstens eines ersten Netzwerkes übertragen und
- im Übertragungsweg nach dem/einem Relay-System vermittels wenigstens eines zweiten Netzwerkes übertragen, welches sich von dem wenigstens einen ersten Netzwerk unterscheidet.

Alternativ oder ergänzend sind entsprechend unterschiedliche Netzwerke jeweils zwischen einem Bearbeitungs-Computersystem und einem für die Kommunikation angebundenen Vermittlungs-Computersystem und zwischen dem entsprechenden Vermittlungs-Computersystem und einem im Kommunikationspfad folgenden Relay-System vorgesehen. Auf diese Weise kann die Computernetz-Infrastruktur in unterschiedliche Sicherheitszonen aufgetrennt werden, wobei die Sicherheitszonen über Relay-Systeme gegen ein Eindringen eines (internen oder externen) Angreifers aus einer anderen Sicherheitszone abgeblockt werden. Auch dies erhöht die Sicherheit innerhalb der Computernetz-Infrastruktur und senkt die Wahrscheinlichkeit eines erfolgreichen Angriffs auf einzelne Computersysteme bzw. die Wahrscheinlichkeit einer Ausbreitung eines Angriffs auf weiterführende Systeme innerhalb der Infrastruktur bzw. erschwert derartige Angriffe drastisch.

Vorteilhaft umfasst bei dem Verfahren der erläuterten Art das Übertragen der Daten-Pakete auf das Relay-System oder auf ein Bearbeitungs-Computersystem die folgenden Schritte:
- Senden einer vorbestimmten Daten-Sequenz an das Relay-System oder an das Bearbeitungs-Computersystem, wobei die vorbestimmten Netzwerk-Ports des Relay-Systems oder des Bearbeitungs-Computersystems geschlossen sind und wobei die Daten-Sequenz in einer vorbestimmten Reihenfolge einen oder mehrere Netzwerk-Ports des Relay-Systems oder des Bearbeitungs-Computersystems anspricht,
- Überprüfen der gesendeten Daten-Sequenz auf Übereinstimmung mit einer vordefinierten Sequenz im Relay-System oder im Bearbeitungs-Computersystem, sowie
- Veranlassen des Übertragens der Daten-Pakete durch das Relay-System oder das Bearbeitungs-Computersystem, falls die Überprüfung der gesendeten Daten-Sequenz positiv ist, wobei das Bearbeitungs-Computersystem oder das Relay-System seinerseits eine Verbindung zum Vermittlungs-Computersystem aufbaut und die Daten-Pakete abholt.

Die hier aufgeführten zusätzlichen Verfahrensschritte können grundsätzlich gegenüber allen Computersystemen durchgeführt werden, welche entsprechende Netzwerk-Ports geschlossen halten, sodass dennoch eine Kommunikation, insbesondere Weiterleitung von Daten-Paketen innerhalb der Computernetz-Infrastruktur, möglich ist.

Die Maßnahmen haben den Vorteil, dass grundsätzlich die (für das Verfahren maßgeblichen) Netzwerk-Ports eines Bearbeitungs-Computersystems oder des zumindest einen Relay-Systems - in oben erläutertem Sinne - geschlossen sind und einen Verbindungsaufbau zu einem Bearbeitungs-Computersystem oder zu dem Relay-System von außen blockieren bzw. einen manipulativen Zugriff deutlich erschweren. Das Veranlassen des Übertragens der Daten-Pakete vermittels eines Bearbeitungs-Computersystems oder des Relay-Systems kann ein automatisierter Prozess zum Übertragen der jeweiligen Daten-Pakete auf das Bearbeitungs-Computersystem oder das Relay-System (z. B. über den Unix-basierten Befehl "Secure Copy, scp)" sein. Gemäß dem Prozess baut das Bearbeitungs-Computersystem oder das Relay-System seinerseits eine Verbindung zum Vermittlungs-Computersystem auf und holt die Daten-Pakete ab. Dieser Prozess kann durch ein Bearbeitungs-Computersystem oder das Relay-System gestartet werden, nachdem eine vorbestimmte Daten-Sequenz an ein Bearbeitungs-Computersystem oder das Relay-System gesendet wurde, falls diese Daten-Sequenz mit einer vordefinierten Sequenz übereinstimmt. Die IP-Adresse des Sequenz-sendenden Computersystems kann dabei statisch im Bearbeitungs-Computersystem oder im Relay-System vorgegeben oder dynamisch aus den dem Kernel des Bearbeitungs-Computersystems oder des Relay-Systems bekannten Quell-IP-Adressen möglicher Sequenzsendender Computersysteme entnommen werden.

Ein derartiges Verfahren ist unter dem Begriff "Port-Knocking" (englisch: to knock - anklopfen) bekannt. Die vorgenannten Schritte können beispielsweise über einen so genannten Knock-Demon, also ein Programm, welches Port-Knocking ermöglicht, durchgeführt werden. Der Knock-Demon horcht an den Netzwerk-Ports eines Bearbeitungs-Computersystems oder des Relay-Systems, überprüft die an das Bearbeitungs-Computersystem oder das Relay-System gesendete Daten-Sequenz und veranlasst gegebenenfalls (z.B. durch Starten eines Skriptes/Programmes) ein gesteuertes Übertragen der entsprechenden Daten-Pakete vom Vermittlungs-Computersystem an das Bearbeitungs-Computersystem, wenn die gesendete Daten-Sequenz mit der vordefinierten Sequenz übereinstimmt. Der oben beschriebene Ablauf ermöglicht somit - aktiviert durch ein Bearbeitungs-Computersystem oder das Relay-System, welche einen entsprechenden Dienst auf einem Vermittlungs-Computersystem über Netzwerk ansprechen - das Übertragen/Kopieren von Daten-Paketen von dem Vermittlungs-Computersystem auf das Bearbeitungs-Computersystem oder das Relay-System, ohne dass das Bearbeitungs-Computersystem oder das Relay-System hierfür einen offenen Netzwerk-Port mit einem ansprechbaren Programm vorhalten müssen.

Alternativ oder ergänzend zum oben erläuterten Port-Knocking ist auch denkbar, dass ein Bearbeitungs-Computersystem oder das Relay-System von sich aus in regelmäßigen Abständen beim Vermittlungs-Computersystem anfragen (Polling), ob ein oder mehrere auszutauschende Daten-Pakete vorliegen. Ist dies der Fall, kann eine entsprechende Übertragung der Daten-Pakete vom Vermittlungs-Computersystem an das Bearbeitungs-Computersystem oder das Relay-System initiiert werden, wie oben erläutert. Es ist auch denkbar, dass das Bearbeitungs-Computersystem oder das Relay-System ein Polling durchführt, wenn z. B. eine bestimmte Zeitspanne überschritten wird, in der kein Port-Knocking seitens des Vermittlungs-Computersystems durchgeführt worden ist. Probleme beim Port-Knocking könnten so erkannt werden und die Funktionalität der Computernetz-Infrastruktur bleibt erhalten.

Nachfolgend soll anhand des erläuterten Verfahrens ein sicherer Zugriff auf ein Bearbeitungs-Computersystem durch ein anderes Bearbeitungs-Computersystem erläutert werden, welches sich (zumindest teilweise) der oben erläuterten Maßnahmen und Verfahrensschritte bedient.

Hierzu wird vorteilhaft in der Gruppe der Bearbeitungs-Computersysteme zwischen wenigstens
- einem Key-Computersystem,
- einem Zugriffs-Computersystem und
- einem Ziel-Computersystem
unterschieden. Zunächst wird eine Sicherheits-Datei für einen gesicherten Zugriff auf das Ziel-Computersystem im Key-Computersystem erstellt. Anschließend wird die Sicherheits-Datei entlang eines definierten Kommunikationspfades vom Key-Computersystem auf das Zugriffs-Computersystem übertragen. Das Übertragen der Sicherheits-Datei erfolgt vorteilhaft vermittels des zumindest einen Vermittlungs-Computersystems, welches im Gegensatz zum Key-Computersystem und Zugriffs-Computersystem geöffnete Netzwerk-Ports aufweist und über Netzwerk für einen Verbindungsaufbau ansprechbar ist. Die Sicherheits-Datei kann somit unmittelbar vom Key-Computersystem auf das Vermittlungs-Computersystem übertragen werden und von dort automatisiert (z. B. vermittels eines durch das Vermittlungs-Computersystem initiierten Port-Knocking-Prozesses, wie oben erläutert) auf das Zugriffs-Computersystem abgeholt werden.

Es ist denkbar, in den Kommunikationspfad zwischen dem Key-Computersystem, dem Vermittlungs-Computersystem und dem Zugriffs-Computersystem auch ein Relay-System gemäß der oben erläuterten Funktionalität zu integrieren. Dies hat den Vorteil, dass gegebenenfalls verschiedene Sicherheitszonen unterschieden werden können, was die Sicherheit gegen Angriffe auf einzelne Computersysteme bzw. gegen eine Ausbreitung eines Angriffs innerhalb der Computernetz-Infrastruktur erhöht.

Es ist jedoch auch denkbar, ein Übertragen der Sicherheits-Datei vom Key-Computersystem auf das Zugriffs-Computersystem durchzuführen, ohne dass ein Relay-System zwischengeschaltet ist. In diesem Fall sind lediglich das Key-Computersystem, zumindest ein Vermittlungs-Computersystem sowie das Zugriffs-Computersystem an der Übertragung der Sicherheits-Datei vom Key-Computersystem auf das Zugriffs-Computersystem beteiligt.

Nachdem die Sicherheits-Datei auf das Zugriffs-Computersystem übertragen worden ist, überprüft dieses zuvor abgefragte Authentifizierungs-Informationen anhand der Sicherheits-Datei. Authentifizierungs-Informationen können beispielsweise Identifikations-Daten von vorbestimmten Benutzern sein, die sich für einen Zugriff auf das Ziel-Computersystem am Zugriffs-Computersystem authentifizieren können bzw. dürfen.

Derartige Identifikations-Daten können beispielsweise personenbezogene biometrische Daten (Fingerabdruck, Handvenen-Scan, Retina-Scan, Stimmenerkennung usw.) und/oder ein temporär (z.B. vermittels einer separaten Sicherheitsinstanz) vergebenes Passwort oder ein personenbezogenes Passwort oder ein sonstiger Schlüssel (z. B. vermittels Chipkarte, ID-Karte, Smartphone, RFID-Tag usw.) sein.

Diese Authentifizierungs-Informationen werden für eine Authentifizierung am Zugriffs-Computersystem abgefragt (beispielsweise über ein hierfür eingerichtetes Terminal) und schließlich mit in der Sicherheits-Datei hinterlegten Informationen verglichen. Beispielsweise enthält die Sicherheits-Datei entsprechende Authentifizierungs-Informationen, welche für vorbestimmte Benutzer, für die ein Zugriff erlaubt sein soll, durch das Key-Computersystem vergeben oder festgelegt sind. Stimmen die abgefragten Authentifizierungs-Informationen mit den Informationen innerhalb der Sicherheits-Datei überein, so können sich Benutzer am Zugriffs-Computersystem erfolgreich authentifizieren.

Das Zugriffs-Computersystem kann speziell abgesichert gegen einen physischen Zugriff sein, z.B. in einem speziell geschützten Raum lokalisiert sein. Beispielsweise kann das Zugriffs-Computersystem in einem Hochsicherheits-Rack eingerichtet und nur mit gesonderter Zugangsberechtigung physisch zugänglich sein. Ein logischer Zugriff auf das Zugriffs-Computersystem erfolgt bevorzugt nur über eingeschränkte Rechte (z. B. über eine so genannte "restricted Shell"), um Manipulationsmöglichkeiten am Zugriffs-Computersystem möglichst zu unterbinden. Weiterhin sind übliche Sicherheitsmaßnahmen am Zugriffs-Computersystem (z. B. Dateisystem-Verschlüsselungen) vorzusehen.

Nach einer erfolgreichen Authentifizierung aller Zugangsberechtigten (erzwungenes n-Augen Prinzip) am Zugriffs-Computersystem gemäß den oben erläuterten Maßnahmen, erfolgt als zusätzliche Sicherheitsmaßnahme ein Freischalten des Ziel-Computersystems für einen Zugriff vermittels des Zugriff-Computersystems. Ein Freischalten des Ziel-Computersystems umfasst vorteilhaft das Öffnen eines für dieses Verfahren vorgesehenen selektiven Netzwerk-Ports am Ziel-Computersystem. Ein Freischalten kann auf die IP-Adresse, gegebenenfalls ergänzt um einen vorbestimmten Quell-Port, des Zugriffs-Computersystems beschränkt sein.

Falls das Überprüfen der Authentifizierungs-Informationen durch das Zugriffs-Computersystem erfolgreich war, erfolgt somit in einem weiteren Schritt das eigentliche Freischalten des Ziel-Computersystems, sodass vermittels des Zugriff-Computersystems auf das Ziel-Computersystem zugegriffen werden kann.

Auf diese Weise ist unter Einbindung bzw. konkreter Anwendung eines Kommunikationsverfahrens der oben erläuterten Art ein sicherer Zugriff auf ein Bearbeitungs-Computersystem (Ziel-Computersystem) durch ein anderes Bearbeitungs-Computersystem (Zugriffs-Computersystem) möglich.

Bevorzugt wird in der Gruppe der Bearbeitungs-Computersysteme gemäß dem konkret erläuterten Verfahren für einen Zugriff auf das Ziel-Computersystem zusätzlich nach wenigstens einem Autorisierungs-Computersystem unterschieden. Dabei wird die Sicherheits-Datei vom Key-Computersystem zumindest vermittels eines Vermittlungs-Computersystems auf das Autorisierungs-Computersystem übertragen. Im Autorisierungs-Computersystem kann die Sicherheits-Datei um vorbestimmte Zugriffs-Informationen ergänzt werden und/oder mit einem privaten Schlüssel signiert werden. Anschließend wird die Sicherheits-Datei im Kommunikationspfad hin zum Zugriffs-Computersystem weiter übertragen.

Ein Ergänzen der Sicherheits-Datei um vorbestimmte Zugriffs-Informationen kann beispielsweise ein Auswählen von bestimmten Personen aus einer hinterlegten Liste erlaubter Personen oder das Hinterlegen von Identifikations-Daten ausgewählter Personen umfassen. Ein lokales Signieren der Sicherheits-Datei mit einem privaten Schlüssel im Autorisierungs-Computersystem hat die Funktion eines Bestätigens der Sicherheits-Datei und gegebenenfalls enthaltener Informationen.

Es ist denkbar, die Sicherheits-Datei an mehrere Autorisierungs-Computersysteme innerhalb der Computernetz-Infrastruktur zu übertragen, um auf diese Weise ein verkettetes bzw. kaskadiertes Signieren durchzuführen. Dies hat den Vorteil, dass mehrere Sicherheits-Instanzen zwingend am Prozess beteiligt sind und die Gefahr von Manipulationen der Sicherheits-Datei stark reduziert werden kann. Ein Angriff auf die Computernetz-Infrastruktur zur Manipulation einer Sicherheits-Datei für einen manipulierten Zugriff auf das Ziel-Computersystem würde somit die Übernahme eines jeden Autorisierungs-Computersystems und eine damit einhergehende Fälschung einer kumulierten Signatur notwendig machen.

Vermittels eines oder mehrerer Autorisierungs-Computersysteme kann somit ein Zugriff auf ein Ziel-Computersystem durch ein Zugriffs-Computersystem sehr sicher gesteuert werden.

Die obige Aufgabe wird in einem weiteren Aspekt durch eine Computernetz-Infrastruktur nach Patentanspruch 8 gelöst, die zumindest umfasst:
- eine Gruppe von Bearbeitungs-Computersystemen,
- zumindest ein Vermittlungs-Computersystem und
- zumindest ein Relay-System.

Die Computernetz-Infrastruktur ist derart eingerichtet, dass Daten-Pakete entlang eines vorbestimmten Übertragungsweges zwischen mehreren Bearbeitungs-Computersystemen vermittels des zumindest einen Vermittlungs-Computersystems und des zumindest einen Relay-Systems übertragbar sind. Das Relay-System ist dem zumindest einen Vermittlungs-Computersystem im Übertragungsweg der Daten-Pakete vor- oder nachgeschaltet. Ferner weisen alle Bearbeitungs-Computersysteme jeweils eine Zugriffssteuereinheit auf, die eingerichtet ist, zumindest vorübergehend vorbestimmte, für diese Maßnahmen verwendete Netzwerk-Ports dauerhaft während der Durchführung der Maßnahmen derart geschlossen zu halten, dass kein Verbindungsaufbau von außen zugelassen wird und somit ein Zugriff auf ein jeweiliges Bearbeitungs-Computersystem über ein Netzwerk vermittels dieser Netzwerk-Ports verhindert ist. Das zumindest eine Relay-System weist ebenfalls eine Zugriffssteuereinheit auf, die eingerichtet ist, zumindest gegenüber dem Vermittlungs-Computersystem, dem das Relay-System vor- oder nachgeschaltet ist, vorbestimmte, für diese Maßnahmen verwendete Netzwerk-Ports dauerhaft während der Durchführung der Maßnahmen derart geschlossen zu halten, dass zumindest vom Vermittlungs-Computersystem aus kein Verbindungsaufbau zum Relay-System zugelassen wird und somit ein Zugriff auf das Relay-System über ein Netzwerk vermittels dieser Netzwerk-Ports verhindert ist. Die Bearbeitungs-Computersysteme und das Relay-System sind eingerichtet, eine Verbindung zum Vermittlungs-Computersystem aufzubauen, um ein Daten-Paket im Vermittlungs-Computersystem abzulegen oder von dort abzuholen.

Eine derartige Computernetz-Infrastruktur erlaubt eine Kommunikation zwischen Bearbeitungs-Computersystemen, konkret einen Austausch von Daten-Paketen, obwohl sämtliche Bearbeitungs-Computersysteme Netzwerk-Ports - wie in obigem Sinne erläutert - nach außen geschlossen halten, sodass kein laufendes Programm oder ein laufender Dienst an geöffneten Netzwerk-Ports für einen Verbindungsaufbau von außen notwendig und eingerichtet ist, was eine potenzielle Sicherheitslücke für Angreifer über Netzwerk ermöglichen würde.

Vielmehr sind sämtliche Bearbeitungs-Computersysteme durch geschlossene Netzwerk-Ports von außen nicht ansprechbar und erlauben keinen Verbindungsaufbau von außen. Jedoch können die Bearbeitungs-Computersysteme auf das zumindest eine Vermittlungs-Computersystem zugreifen, welches als offenes System - im oben erläuterten Sinne - mit zumindest einem für die genannte Zwecke geöffneten Netzwerk-Port über ein laufendes Programm oder einen laufenden Dienst von außen ansprechbar ist. Auf diese Weise können Daten-Pakete von einem Bearbeitungs-Computersystem auf dem Vermittlungs-Computersystem abgelegt werden oder von dort abgeholt werden.

Zudem fungiert das Relay-System - in oben erläutertem Sinne - als eine Art "Router" für die Daten-Pakete innerhalb der Computernetz-Infrastruktur, wobei jedoch das Relay-System zumindest gegenüber dem Vermittlungs-Computersystem, dem das Relay-System nachgeschaltet ist, ebenfalls vorbestimmte Netzwerk-Ports geschlossen hält. Somit ist das Relay-System vom zumindest einen Vermittlungs-Computersystem aus nicht über Netzwerk ansprechbar, weil auch auf dem Relay-System kein laufendes Programm oder kein laufender Dienst an geöffneten Netzwerk-Ports eingerichtet ist. Das Relay-System ist also ein "Anti-Router". Das Relay-System kann jedoch auf das Vermittlungs-Computersystem zugreifen und eine Verbindung aufbauen, um von dort Daten-Pakete abzuholen und an ein Computersystem weiterzuleiten, welches dem Relay-System nachgeschaltet ist (z. B. ein Ziel-Bearbeitungs-Computersystem).

Aufgrund der zumindest in einer Übertragungsrichtung vorliegenden Abschottung des Relay-Systems gegenüber einem oder mehreren Vermittlungs-Computersystemen innerhalb der Computernetz-Infrastruktur ist eine zusätzliche Sicherheitshürde geschaffen, die ein Ausbreiten eines Angriffs auf ein dem Relay-System nachgeschaltetes Computersystem innerhalb der Computernetz-Infrastruktur unterbindet. Das Relay-System dient innerhalb der Computernetz-Infrastruktur somit als eine Art Router, der aber im Gegensatz zu herkömmlichen Routern keinerlei Verbindungsaufbau zumindest über das dem Relay-System vorgeschaltete Vermittlungs-Computersystem zulässt ("Anti-Router"). Das Relay-System bildet in dieser Übertragungsrichtung somit einen wirksamen Schutz vor unberechtigtem Eindringen, insbesondere in Netzwerk-Pfade, welche dem Relay-System nachgeschaltet sind.

Das Relay-System kann (wie oben bereits im Zusammenhang mit dem Verfahren erläutert) ein Relay-Server, ggf. modifizierter Router usw. sein. Vorteilhaft leitet das Relay-System ein Daten-Paket, welches das Relay-System von einem Vermittlungs-Computersystem erhält, dem das Relay-System nachgeschaltet ist, unmittelbar an ein weiteres (Vermittlungs-) Computersystem weiter, welches wiederum dem Relay-System nachgeschaltet ist. Im Falle eines Bearbeitungs-Computersystems, welches dem Relay-System unmittelbar nachgeschaltet ist, kann durch das Bearbeitungs-Computersystem ein Prozess angestoßen werden, der - wie oben erläutert - ein Daten-Paket vom Relay-System abholt.

In einer Ausführungsform ist das Relay-System in einem Übertragungsweg der Daten-Pakete einem Bearbeitungs-Computersystem unmittelbar vor- oder nachgeschaltet, wobei die Zugriffssteuereinheit des Relay-Systems eingerichtet ist, dass das Relay-System zu diesem Bearbeitungs-Computersystem hin zumindest einen Netzwerk-Port geöffnet hat, so dass dieses Bearbeitungs-Computersystem eine Verbindung zum Relay-System aufbauen kann, um ein Daten-Paket im Relay-System abzulegen oder von dort abzuholen.

Vorteilhaft umfasst die Computernetz-Infrastruktur der erläuterten Art in einer weiteren Ausführungsform wenigstens zwei Vermittlungs-Computersysteme, wobei das zumindest eine Relay-System den Vermittlungs-Computersystemen im Übertragungsweg der Daten-Pakete zwischengeschaltet ist. Die Zugriffs-Steuereinheit des zumindest einen Relay-Systems ist eingerichtet, zumindest gegenüber einem der Vermittlungs-Computersysteme, denen das Relay-System zwischengeschaltet ist, vorbestimmte, für dieses Verfahren verwendete Netzwerk-Ports entsprechend geschlossen zu halten.

Insbesondere bei geschlossenen Netzwerk-Ports des Relay-Systems gegenüber beiden Vermittlungs-Computersystemen, denen das Relay-System zwischengeschaltet ist, ergibt sich der Vorteil, dass das Relay-System in beiden Richtungen (von beiden Vermittlungs-Computersystemen ausgehend) einen wirksamen Schutz vor unberechtigtem Eindringen bildet. Insbesondere wird ein Ausbreiten eines Angriffs auf eines der Vermittlungs-Computersysteme innerhalb der Computernetz-Infrastruktur durch das Relay-System vereitelt.

Bevorzugt ist die Computernetz-Infrastruktur derart eingerichtet, dass Daten-Pakete im Übertragungsweg vor dem zumindest einen Relay-System und nach dem zumindest einen Relay-System anhand unterschiedlicher Übertragungsprotokolle übertragbar sind. Wie oben im Zusammenhang mit dem Verfahren erläutert, bildet ein Wechsel von Übertragungsprotokollen eine weitere Sicherheitsmaßnahme, sodass ein Angriff auf ein einzelnes Übertragungsprotokoll den Sicherheitsmechanismus der Computernetz-Infrastruktur nicht versagen lässt und erfolglos bleibt, weil nach dem Relay-System auf ein anderes Übertragungsprotokoll gewechselt wird. Bei Einsatz mehrerer Relay-Systeme sind auch mehr als zwei Übertragungsprotokolle verwendbar. Ebenso können Übertragungsprotokolle richtungsabhängig unterschieden werden.

Vorteilhaft umfasst die Computernetz-Infrastruktur mehrere Netzwerke, wobei Computersysteme im Übertragungsweg vor dem/einem Relay-System vermittels wenigstens eines ersten Netzwerkes verbunden sind und wobei Computersysteme im Übertragungsweg nach dem/einem Relay-System vermittels wenigstens eines zweiten Netzwerkes verbunden sind, welches sich von dem wenigstens einen ersten Netzwerk unterscheidet. Das Relay-System bildet somit einen abgeschotteten Vermittler zwischen unterschiedlichen Netzwerken, sodass verschiedene Sicherheitszonen innerhalb der Computernetz-Infrastruktur unterscheidbar sind. Auch dies erhöht die Sicherheit innerhalb der Computernetz-Infrastruktur.

Vorteilhaft ist die Computernetz-Infrastruktur der erläuterten Art eingerichtet, ein Verfahren der oben erläuterten Art durchzuführen.

Sämtliche vorteilhaften Aspekte, Merkmale sowie Maßnahmen des oben erläuterten Verfahrens entsprechen strukturellen Merkmalen der Computernetz-Infrastruktur und finden analog Anwendung. Umgekehrt sind alle strukturellen Merkmale der an dieser Stelle erläuterten Computernetz-Infrastruktur auf ein Verfahren der oben erläuterten Art anwendbar.

Die Computernetz-Infrastruktur ist vorteilhaft eingerichtet, einen gesicherten Zugriff eines Bearbeitungs-Computersystems auf ein anderes Bearbeitungs-Computersystem durchzuführen. Vorteilhaft umfasst die Gruppe der Bearbeitungs-Computersysteme innerhalb der Computernetz-Infrastruktur hierzu wenigstens
- ein Key-Computersystem,
- ein Zugriffs-Computersystem und
- ein Ziel-Computersystem.

Das Key-Computersystem ist eingerichtet, eine Sicherheits-Datei für einen gesicherten Zugriff auf das Ziel-Computersystem zu erstellen und entlang eines vorbestimmten Kommunikationspfades an das Zugriffs-Computersystem zu übertragen. Eine derartige Übertragung ist vermittels des zumindest einen Vermittlungs-Computersystems durchführbar. Dabei ist die Sicherheits-Datei vom Key-Computersystem (welches selbst geschlossene Netzwerk-Ports aufweist) auf das Vermittlungs-Computersystem (welches an einem offenen Netzwerk-Port ein laufendes Programm oder einen laufenden Dienst für einen Verbindungsaufbau von außen eingerichtet hat) übertragbar. Ferner ist die Sicherheits-Datei durch Zugriff des Zugriff-Computersystems, welches selbst ebenfalls geschlossene Netzwerk-Ports aufweist, auf das Vermittlungs-Computersystem durch das Zugriffs-Computersystem zu sich abholbar.

Optional kann eine Übertragung der Sicherheits-Datei vom Key-Computersystem auf das Zugriffs-Computersystem über zumindest ein Relay-System der erläuterten Art geleitet werden. Dies hat die oben erläuterten Vorteile einer Abschottung verschiedener Sicherheitszonen innerhalb der Computernetz-Infrastruktur.

Es ist jedoch auch denkbar, eine entsprechende Übertragung der Sicherheits-Datei ohne ein entsprechendes Relay-System durchzuführen. In diesem Fall wären lediglich das Key-Computersystem, zumindest ein Vermittlungs-Computersystem sowie das Zugriffs-Computersystem an einer entsprechenden Übertragung der Sicherheits-Datei beteiligt.

Das Zugriffs-Computersystem ist eingerichtet, eine Eingabe von Authentifizierungs-Informationen am Zugriffs-Computersystem abzufragen und diese Authentifizierungs-Informationen anhand der Sicherheits-Datei zu überprüfen.

Das Zugriffs-Computersystem ist vorteilhaft für eine Eingabe von biometrischen Daten eines Benutzers (z.B. Fingerabdruck, Handvenen-Scan, Retina-Scan, Stimmenerkennung usw.) oder die Eingabe eines temporären oder personenbezogenen Passworts oder sonstigen Schlüssels (z.B. auch vermittels Chipkarte, ID-Karte, Smartphone, RFID-Tag usw.) vorbereitet. Eine derartige Eingabe kann beispielsweise an einem Terminal des Zugriffs-Computersystems eingerichtet sein, an dem das Zugriffs-Computersystem eine Eingabe erwartet und entsprechende Informationen abfragt.

Das Ziel-Computersystem ist eingerichtet, einen selektiven Netzwerk-Port für einen Zugriff auf das Ziel-Computersystem vermittels des Zugriffs-Computersystems in Abhängigkeit eines Überprüfens der Authentifizierungs-Informationen durch das Zugriffs-Computersystem freizuschalten. Ein derartiges Freischalten kann beispielsweise auf die IP-Adresse und gegebenenfalls einen vorbestimmten Netzwerk-Port des Zugriffs-Computersystems beschränkt sein. Das Zugriffs-Computersystem kann dann selektiv auf das Ziel-Computersystem vermittels des freigeschalteten Netzwerk-Ports zugreifen, sodass eine authentifizierte Benutzergruppe vermittels des Zugriffs-Computersystems einen Zugriff auf das Ziel-Computersystem erhält. Es ist denkbar, eine entsprechende Freischaltung nur temporär zuzulassen.

Vorteilhaft umfasst die Gruppe der Bearbeitungs-Computersysteme innerhalb der Computernetz-Infrastruktur zusätzlich wenigstens ein Autorisierungs-Computersystem. Das Autorisierungs-Computersystem ist eingerichtet, die Sicherheits-Datei nach einem Übertragen der Sicherheits-Datei auf das Autorisierungs-Computersystem um vorbestimmte Zugriffs-Informationen zu ergänzen und/oder die Sicherheits-Datei zu signieren, sowie die Sicherheits-Datei im Kommunikations-Pfad weiter zu übertragen.

Vorteilhaft ist das Autorisierungs-Computersystem im Übertragungsweg der Sicherheits-Datei zwischen dem Key-Computersystem und dem Zugriffs-Computersystem zwischengeschaltet. Auf diese Weise erlaubt das Autorisierungs-Computersystem ein entsprechendes Bearbeiten der Sicherheits-Datei (z. B. Einfügen weiterer Informationen oder Bestätigen der Sicherheits-Datei, lokales Signieren, usw.). Die Sicherheits-Datei kann z.B. ein temporäres Passwort oder andere Merkmale für einen Zugriff auf das Zugriffs-Computersystem in verschlüsselter Form erhalten und so einen einmaligen und individuellen Zugriff ermöglichen.

In einem weiteren Aspekt wird die obige Aufgabe durch ein Computerprogramm-Produkt gelöst, welches eingerichtet ist, auf zumindest einem Computersystem ausgeführt zu werden und welches bei dessen Ausführung ein Verfahren der oben erläuterten Art durchführt. Auf diese Weise ist ein automatisiertes Implementieren des Verfahrens auf einem oder mehreren Computersystemen, vorteilhaft innerhalb einer erläuterten Computernetz-Infrastruktur, möglich.

Weitere vorteilhafte Ausgestaltungen sind in den Unteransprüchen sowie in der nachfolgenden Figurenbeschreibung offenbart.

Die Erfindung wird anhand mehrerer Zeichnungen im Folgenden näher erläutert.

Es zeigen:
- Figur 1: eine schematisierte Darstellung eines Teils einer Computernetz-Infrastruktur,
- Figur 2A: eine schematisierte Darstellung einer Computernetz-Infrastruktur mit unterschiedlichen Sicherheitszonen,
- Figur 2B: eine schematisierte Darstellung einer Computernetz-Infrastruktur gemäß Figur 2A mit geänderten Netzwerk-Pfaden,
- Figur 3: eine schematische Darstellung eines Teils einer Computernetz-Infrastruktur unter Verwendung mehrerer Übertragungsprotokolle,
- Figur 4: eine schematisierte Darstellung einer Computernetz-Infrastruktur mit mehreren Sicherheitszonen gemäß einer weiteren Konfiguration,
- Figur 5: eine schematisierte Darstellung einer Computernetz-Infrastruktur mit mehreren Sicherheitszonen gemäß einer weiteren Konfiguration, und
- Figur 6: eine schematisierte Darstellung einer Computernetz-Infrastruktur mit verschiedenen Sicherheitszonen für einen sicheren Zugriff auf ein Computersystem.

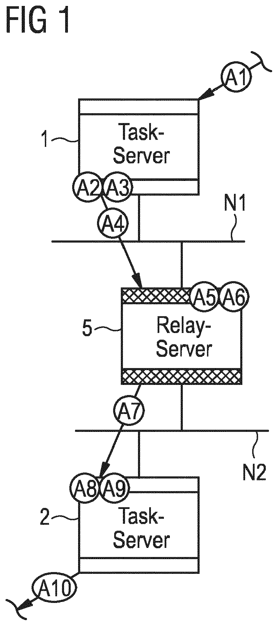

Figur 1 zeigt eine schematisierte Darstellung zumindest eines Teils einer Computernetz-Infrastruktur zur Kommunikation zwischen mehreren Computersystemen und zur Weiterleitung von Daten-Paketen zwischen diesen Computersystemen. Die Topologie gemäß Figur 1 umfasst zwei Vermittlungs-Computersysteme, nämlich einen Task-Server 1 und einen Task-Server 2. Diesen beiden Computersystemen ist ein Weiterleitungs-Computersystem, nämlich ein so genannter Relay-Server 5, zwischengeschaltet. Eine Datenverbindung zwischen Task-Server 1 und Relay-Server 5 wird über ein erstes Netzwerk N1 sichergestellt. Eine Datenverbindung zwischen dem Relay-Server 5 und dem Task-Server 2 wird über ein zweites Netzwerk N2 sichergestellt.

Der Task-Server 1 und der Task-Server 2 sind offene Systeme. Das bedeutet, dass diese jeweils zumindest einen für die weiteren Zwecke geöffneten Netzwerk-Port haben, an dem ein laufendes Programm oder ein laufender Dienst für eine Ansprechbarkeit und einen Verbindungsaufbau über Netzwerk von außen eingerichtet ist.

Im Gegensatz dazu ist der Relay-Server 5 ein eingekapseltes System mit geschlossenen Netzwerk-Ports sowohl gegenüber dem Task-Server 1 als auch gegenüber dem Task-Server 2 (siehe kreuzschraffierte Ein-/Ausgangsebenen am Relay-Server 5). Das bedeutet, dass auf dem Relay-Server 5 keinerlei laufende Programme oder Dienste an einem geöffneten Netzwerk-Port verfügbar sind, sodass der Relay-Server 5 keinerlei Verbindungsaufbau aus beiden Richtungen (sowohl ausgehend von Task-Server 1 als auch ausgehend von Task-Server 2) über die Netzwerke N1 und N2 zulässt. Somit trennt der Relay-Server 5 die beiden Netzwerke N1 und N2. Dennoch fungiert der Relay-Server als eine Art Vermittler ("Anti-Router") zwischen den beiden Netzwerken N1 und N2 zur Weiterleitung von Daten-Paketen zwischen dem Task-Server 1 und dem Task-Server 2.

Figur 1 zeigt mehrere Verfahrensschritte A1 bis A10 zur Weiterleitung von Daten-Paketen innerhalb der Struktur, welche im Folgenden näher erläutert werden.

In einem ersten Schritt A1 wird ein Daten-Paket von einer Instanz außerhalb der in Figur 1 dargestellten Struktur auf den Task-Server 1 übertragen und dort abgelegt. In Schritt A2 erfolgt eine interne Verarbeitung im Task-Server 1, z. B. das Vermerken eines Transportverlaufs des Daten-Pakets. In Schritt A3 wird im Task-Server 1 ein Routing auf weitere Computersysteme innerhalb der Struktur gemäß Figur 1 ermittelt und ein Port-Knocking-Prozess über das Netzwerk N1 gegenüber dem Relay-Server 5 durchgeführt. Hierzu sendet Task-Server 1 über das Netzwerk N1 eine Daten-Sequenz, welche vorbestimmte Netzwerk-Ports am Relay-Server 5 anspricht. Ein Knock-Daemon im Relay-Server 5 vergleicht die empfangene Daten-Sequenz mit einer vorbestimmten Sequenz und veranlasst bei Übereinstimmung das Starten eines Prozesses.

Dieser Prozess umfasst einen Verbindungsaufbau durch den Relay-Server 5 am ansprechbaren Task-Server 1 und ein automatisiertes Übertragen des Daten-Paketes vom Task-Server 1 auf den Relay-Server 5. Ein derartiges Übertragen kann beispielsweise über den Unix-basierten Befehl "Secure Copy", scp erfolgen. Daraufhin wird das Daten-Paket in Schritt A4 vom Task-Server 1 anhand der hergestellten Verbindung ("established") auf den Relay-Server 5 über das Netzwerk N1 übertragen.

In Schritt A5 erfolgt eine weitere Verarbeitung innerhalb des Relay-Servers 5, z. B. ebenfalls das Vermerken eines Transportverlaufs. In Schritt A6 wird ein weiteres Routing im Relay-Server 5 ermittelt, wobei in Schritt A7 der Weitertransport des Daten-Paketes über Netzwerk N2 auf den ansprechbaren Task-Server 2 erfolgt. Im Task-Server 2 erfolgt in Schritt A8 eine weitere Verarbeitung, z. B. ebenfalls das Vermerken eines Transportverlaufs, sowie in Schritt A9 das Ermitteln eines weiteren Routings auf Computersysteme außerhalb der in Figur 1 dargestellten Struktur. In Schritt A10 kann schließlich ein entsprechender Weitertransport des Daten-Paketes erfolgen.

Die Struktur gemäß Figur 1 zeigt somit drei Vermittlungs-Computersysteme, Task-Server 1, Task-Server 2 sowie Relay-Server 5, welche als Topologie mit gemischt geöffneten und geschlossenen Netzwerk-Ports eingerichtet sind. Auf diese Weise ist ein Routing von Daten-Paketen über den Relay-Server 5 möglich, wobei der Relay-Server 5 gleichzeitig eine Abschottung des Task-Servers 1 aus Netzwerk N1 gegenüber dem Task-Server 2 aus Netzwerk N2 und umgekehrt ermöglicht. Ein Angriff auf Task-Server 1 ist somit nur mit erheblichem Aufwand und deutlich erschwert gegenüber herkömmlichen Infrastrukturen über Netzwerk N1 und den Relay-Server 5 auf Netzwerk N2 und den Task-Server 2 ausdehnbar. Entsprechendes gilt ausgehend von Task-Server 2 in Richtung Task-Server 1. Der Relay-Server 5 bildet auf diese Weise einen abgesicherten "Knoten" innerhalb der Computernetz-Infrastruktur. Dennoch ist anhand der erläuterten Verfahrensschritte ein Weitertransport von Daten-Paketen innerhalb der Infrastruktur ermöglicht.

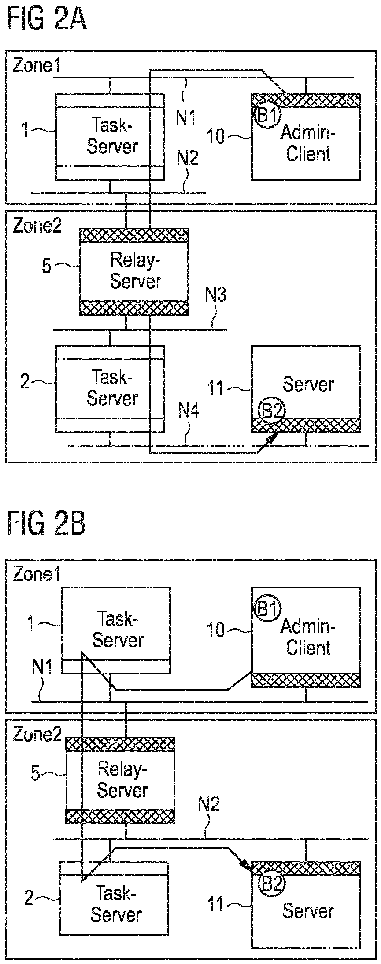

Figur 2A zeigt eine schematisierte Darstellung einer Computernetz-Infrastruktur, welche unter anderem Komponenten gemäß Figur 1 umfasst. Insbesondere ist ein Task-Server 1 über ein Netzwerk N2 an einen Relay-Server 5 angebunden, während der Relay-Server 5 über ein Netzwerk N3 an einen Task-Server 2 angebunden ist. Zusätzlich sind zwei Bearbeitungs-Computersysteme, nämlich ein so genannter Admin-Client 10 und ein weiterer Server 11, eingerichtet. Der Admin-Client 10 ist über ein Netzwerk N1 an den Task-Server 1 angebunden, während der Server 11 über ein Netzwerk N4 an den Task-Server 2 angebunden ist.

Admin-Client 10 und Task-Server 1 sind in einer Zone 1 eingerichtet, während Relay-Server 5, Task-Server 2 und Server 11 in einer separaten Zone 2 (räumliche Trennung) eingerichtet sind.

Die beiden Bearbeitungs-Computersysteme, Admin-Client 10 und Server 11 weisen geschlossene Netzwerk-Ports auf (siehe kreuzschraffierte Ein-/Ausgangsebenen), an denen kein laufendes Programm oder kein laufender Dienst für einen Verbindungsaufbau über das Netzwerk N1 oder das Netzwerk N4 vom jeweiligen Task-Server 1 oder 2 aus ermöglicht ist. Auf diese Weise sind Admin-Client 10 und Server 11 eingekapselte Systeme (ähnlich dem Verhalten des Relay-Servers 5 in diesem Zusammenhang). Der Relay-Server 5 arbeitet gemäß Figur 2 in der gleichen Weise zusammen mit den Task-Servern 1 und 2, wie in Zusammenhang mit Figur 1 erläutert.

Ein Daten-Paket kann ausgehend von Admin-Client 10 über Netzwerk N1 auf dem Task-Server 1 abgelegt werden. Beispielsweise kann der Admin-Client 10 in einem Schritt B1 lokal einen Prozess (Task) initiieren, welcher in einem Schritt B2 auf dem Server 11 ausgeführt werden soll. Dieser Prozess kann beispielsweise in einer Task-Datei definiert und festgelegt werden, welche über die Topologie des Task-Servers 1, des Relay-Servers 5 und des Task-Servers 2 auf den Server 11 übertragen wird, dort analysiert wird und ein entsprechender Prozess anhand der Task-Datei ausgelöst wird.

Zum Übertragen der Task-Datei von Task-Server 1 aus Zone 1 hin zu Relay-Server 5 in Zone 2 und schließlich zu Task-Server 2 wird das Verfahren herangezogen, wie es gemäß Figur 1 erläutert worden ist. Zum Übertragen der Task-Datei auf den Server 11 vollführt Task-Server 2 schließlich über das Netzwerk N4 einen Port-Knocking-Prozess gegenüber Server 11, sodass dieser die Task-Datei vom Task-Server 2 abholt und in Schritt B2 einen entsprechenden Prozess lokal ausführt.

In Figur 2A wird der Vorteil des Relay-Servers 5 zur Trennung verschiedener Sicherheitszonen (Zone 1 und Zone 2) deutlich. Beispielsweise können in Zone 1 Arbeitsplatz-Rechner (Admin-Client 10) eingerichtet sein, zu denen Administratoren physischen/logischen Zugang haben. In Zone 2 dagegen ist beispielsweise ein Rechenzentrum (Server 11) eingerichtet, auf dem sichere Daten logisch verarbeitet werden. Zur Steuerung des Rechenzentrums kann ein Administrator aus Zone 1 einen Prozess initiieren, welcher z.B. in Form einer Anweisung vermittels des Relay-Servers 5 in Zone 2 transportiert wird und dort lokal verarbeitet werden kann.

Die Sicherheitszonen, Zone 1 und Zone 2, können beispielsweise physisch und/oder logisch getrennte Sicherheitszonen bilden. Beispielsweise können einzelne Computersysteme getrennt voneinander in Hochsicherheits-Racks mit entsprechendem physischem Zugriffsschutz eingerichtet sein. Ein logischer Zugriffsschutz bzw. eine logische Abschottung der beiden Sicherheitszonen ergibt sich aufgrund des Relay-Servers 5.

Somit haben Administratoren oder auch interne oder externe Angreifer, welche den Admin-Client 10 beherrschen, keinen Zugriff aus Zone 1 vermittels der Netzwerke N1 und N2 (via Task-Server 1) auf den Server 11 in Zone 2, welcher durch den Relay-Server 5 geblockt ist. Andererseits hat ein Mitarbeiter oder interner/externer Angreifer (Cracker), der in den Server 11 in Zone 2 eingedrungen ist, keinen Zugriff vermittels der Netzwerke N3 und N4 (via Task-Server 2) auf den Admin-Client 10 in Zone 1, da dieser durch den Relay-Server 5 geblockt ist. Die Möglichkeit, von einer Sicherheitszone in eine andere einzudringen, wird also von beiden Seiten vermittels des Relay-Servers 5 drastisch erschwert (bzw. unwahrscheinlicher).

Figur 2B zeigt eine Variante der Konfiguration von Figur 2A mit einfacherer Netzwerkstruktur. In Figur 2B sind sowohl der Admin-Client 10 als auch der Task-Server 1 in Zone 1 über ein erstes Netzwerk N1 unmittelbar an den Relay-Server 5 aus Zone 2 angebunden. In der Zone 2 sind der Server 11 sowie der Task-Server 2 über ein zweites Netzwerk N2 an den Relay-Server 5 angebunden. Somit umfasst die Topologie gemäß Figur 2B im Gegensatz zur Topologie aus Figur 2A lediglich zwei unterschiedliche Netzwerke. Ein Transport von Daten-Paketen bzw. Task-Dateien vom Admin-Client 10 über den Task-Server 1, den Relay-Server 5 und den Task-Servers 2 hin zum Server 11 (vergleiche Schritte B1 und B2) kann analog zu dem oben gemäß Figur 2A erläuterten Ablauf erfolgen. Der einzige Unterschied besteht darin, dass ein Transport in Zone 1 lediglich über das einzige Netzwerk N1 und in Zone 2 lediglich über das einzige Netzwerk N2 erfolgt.

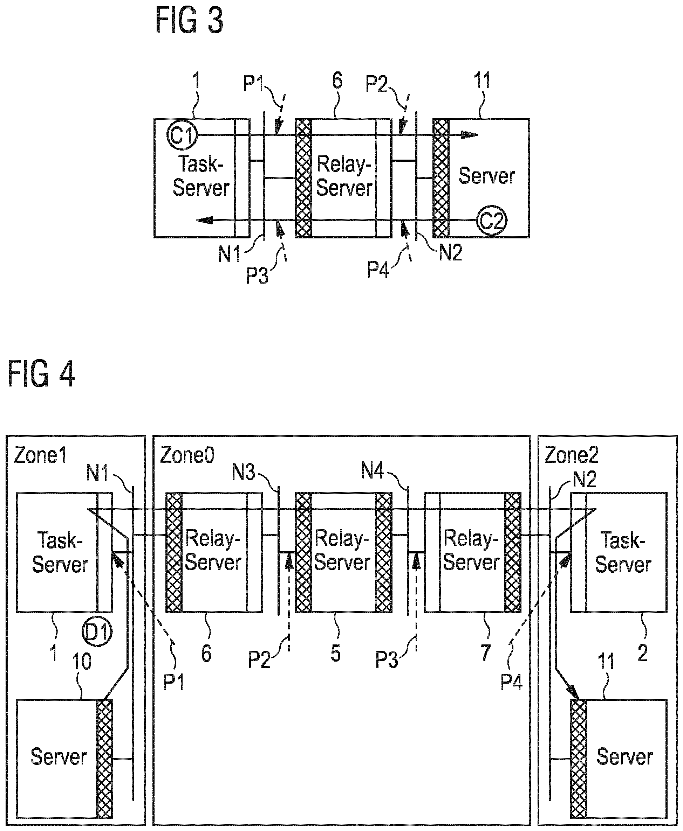

Figur 3 zeigt eine schematisierte Darstellung zumindest eines Teils einer Computernetz-Infrastruktur, umfassend einen Task-Server 1, einen Relay-Server 6 sowie als Bearbeitungs-Computersystem einen Server 11. Task-Server 1 und Relay-Server 6 sind über ein erstes Netzwerk N1 verbunden, während Relay-Server 6 und Server 11 über ein zweites Netzwerk N2 verbunden sind. Der Server 11 ist - wie bereits oben im Zusammenhang mit den Figuren 2A und 2B erläutert - ein eingekapseltes System mit geschlossenen Netzwerk-Ports, sodass Server 11 nicht über ein laufendes Programm oder einen laufenden Dienst von außen für einen Verbindungsaufbau ansprechbar ist.

Der Relay-Server 6 unterscheidet sich zu einem Relay-Server 5 gemäß den Erläuterungen zu Figuren 1 bis 2B dadurch, dass der Relay-Server 6 gemäß Figur 3 lediglich zum Task-Server 1 (d.h. zum Netzwerk N1 hin) geschlossene Netzwerk-Ports aufweist. Dies ist durch eine kreuzschraffierte Kommunikationsebene in Richtung Netzwerk N1 am Relay-Server 6 verdeutlicht.

In Richtung des Servers 11, d. h. in Richtung zum Netzwerk N2 hin, verfügt der Relay-Server 6 dagegen über zumindest einen geöffneten Netzwerk-Port, sodass der Relay-Server 6 vom Server 11 aus über einen laufenden Dienst via Netzwerk N2 ansprechbar und ein Verbindungsaufbau von Server 11 aus möglich ist.

Gemäß Figur 3 ist der Relay-Server 6 somit ein gemischt geöffnetes und geschlossenes System bzw. ein hybrides Vermittlungs-Computersystem zwischen dem Task-Server 1 und dem Server 11. Eine derartige Konfiguration ist bei der Struktur gemäß Figur 3 notwendig, damit Server 11 und Relay-Server 6 über Netzwerk N2 miteinander kommunizieren können. Hätte der Relay-Server 6 in Richtung Netzwerk N2 sämtliche Netzwerk-Ports geschlossen (wie dies der Fall gegenüber Netzwerk N1 ist), so könnte kein Datenaustausch zwischen dem Relay-Server 6 und dem Server 11 stattfinden, weil von beiden Seiten aus kein Verbindungsaufbau zum jeweils anderen Computersystem möglich wäre.

Gemäß der Konfiguration aus Figur 3 erfolgt in einer ersten Übertragungsrichtung C1 vom Task-Server 1 zum Relay-Server 6 und vom Relay-Server 6 zum Server 11 ein Transport von Daten-Paketen jeweils derart, dass zunächst Task-Server 1 an den geschlossenen Netzwerk-Ports des Relay-Servers 6 vermittels des Netzwerks N1 ein Port-Knocking durchführt, woraufhin Relay-Server 6 von sich aus eine Verbindung zu Task-Server 1 aufbaut und ein Abholen der Daten-Pakete vom Task-Server 1 zu sich initiiert.

Selbiges geschieht nachfolgend zwischen dem Relay-Server 6 und dem Server 11, wobei der Relay-Server 6 an den geschlossenen Netzwerk-Ports des Servers 11 vermittels des Netzwerks N2 ein Port-Knocking durchführt, sodass der Server 11 von sich aus Relay-Server 6 über das Netzwerk N2 ansprechen kann, eine Verbindung aufbaut und die Daten-Pakete zu sich abholt.

In der umgekehrten Transportrichtung C2 von Server 11 auf den Relay-Server 6 und schließlich auf den Task-Server 1 erfolgt eine direkte Übertragung von Daten-Paketen ohne ein erforderliches Port-Knocking, da jeweils eine erreichbare Instanz (Relay-Server 6 und Task-Server 1) vorhanden ist, auf die das jeweilige Computersystem (Server 11 bzw. Relay-Server 6) zugreifen kann.

Vorteilhaft werden bei der Konfiguration in Figur 3 verschiedene Übertragungsprotokolle zur Weiterleitung von Daten-Paketen zwischen den einzelnen Computersystemen eingesetzt. So wird in der Übertragungsrichtung C1 zwischen dem Task-Server 1 und dem Relay-Server 6 ein erstes Übertragungsprotokoll P1 verwendet, wobei der Relay-Server 6 nach Abholen von Daten-Paketen zu sich einen Wechsel des Übertragungsprotokolls vornimmt, sodass eine weitere Übertragung von Daten-Paketen zum Server 11 hin über ein zweites Übertragungsprotokoll P2 stattfindet.

Umgekehrt erfolgt in der Transportrichtung C2 ein Übertragen von Daten-Paketen vom Relay-Server 6 auf den Task-Server 1 gemäß einem dritten Übertragungsprotokoll P3, während eine Übertragung von Daten-Paketen von Server 11 auf den Relay-Server 6 über ein viertes Übertragungsprotokoll P4 stattfindet.

Auf diese Weise findet richtungsabhängig (C1 und C2) in einem jeweiligen Übertragungsweg jeweils vor und nach dem Relay-Server 6 ein unterschiedliches Übertragungsprotokoll (P1 bis P4) Anwendung. Auf diese Weise kann verhindert werden, dass Sicherheitsprobleme in einem einzigen Protokoll ein Versagen der Sicherheitsmechanismen innerhalb der Computernetz-Infrastruktur bedeuten können. Vielmehr müssten für den jeweiligen dargestellten Pfad (C1 und C2) jeweils beide verwendeten Protokolle (vergleiche P1 und P2 bzw. P3 und P4) angegriffen werden, was deutlich unwahrscheinlicher bzw. schwieriger ist als ein Angriff auf ein einzelnes Protokoll und was damit eine größere Sicherheit bietet als die Verwendung nur eines einzelnen Protokolls.

Abweichend von der Konfiguration gemäß Figur 3 können auch mehrere Relay-Server 6, unter Umständen gemischt mit Relay-Servern 5 gemäß den Figuren 1 bis 2B, eingesetzt werden, sodass vielerlei Kombinationsmöglichkeiten, gepaart mit einem Wechsel von Übertragungsprotokollen denkbar ist, um die Sicherheit innerhalb der Computernetz-Infrastruktur weiter zu erhöhen.

Eine solche denkbare Konfiguration ist gemäß Figur 4 dargestellt. Hierbei ist eine Computernetz-Infrastruktur mit insgesamt drei Sicherheitszonen gezeigt. Innerhalb einer Zone 0 (in der Mitte) befinden sich drei Relay-Server 5, 6 und 7, wobei ein zentraler Relay-Server 5 jeweils in beide Richtungen zu einem Netzwerk N3 und zu einem Netzwerk N4 hin abgeschottet ist und geschlossene Netzwerk-Ports aufweist. Auf diese Weise bildet der Relay-Server 5 als zentrales Vermittlungs-Computersystem eine komplette Abschottung in beide Übertragungsrichtungen.

Im Gegensatz zu Relay-Server 5 sind die beiden anderen Relay-Server 6, 7 als außenstehende Vermittlungs-Computersysteme zur Weiterleitung von Daten-Paketen aus der Zone 0 heraus in Richtung Zone 1 bzw. in Richtung Zone 2 jeweils lediglich in Richtung eines Netzwerks N1 in Zone 1 (vergleiche Relay-Server 6) bzw. in Richtung eines Netzwerks N2 in Zone 2 (vergleiche Relay-Server 7) abgeschottet und weisen nur in diesen Richtungen geschlossene Netzwerk-Ports auf (vergleiche kreuzschraffierte Ein-/Ausgangsebenen der jeweiligen Relay-Server 5, 6 und 7 aus Zone 0).

Die Relay-Server 6 und 7 weisen jedoch in Richtung des zentralen Relay-Servers 5 jeweils zumindest einen geöffneten Netzwerk-Port auf, sodass die Relay-Server 6 und 7 für eine Kommunikation mit dem Relay-Server 5 zumindest über einen laufenden Dienst vom Relay-Server 5 aus ansprechbar sind. Somit bildet die Zone 0 eine zentrale Sicherheitszone, welche durch die Konfiguration der Relay-Server 5, 6 und 7 die beiden Zonen 1 und 2 (periphere Kommunikations-Zonen) gegenseitig abschottet. Ein Angriff auf einzelne Computersysteme in einer der beiden Zonen (Zone 1 oder Zone 2) kann somit durch die Relay-Server aus Zone 0 abgeblockt werden und kann sich nicht über die Zone 0 hinaus auf die andere Zone (Zone 1 oder Zone 2) ausbreiten.

Eine derartige Sicherheitshürde der Zone 0 kann dadurch verstärkt werden, dass zwischen den einzelnen Computersystemen, insbesondere in den einzelnen Netzwerken N1, N2, N3 und N4, jeweils unterschiedliche Übertragungsprotokolle P1 bis P4 eingesetzt werden. Gegebenenfalls kann ein Wechsel von Übertragungsprotokollen auch gemäß Figur 4 richtungsabhängig zwischen einzelnen Computersystemen erfolgen. Konkret ist in Figur 4 die Verwendung eines Übertragungsprotokolls P1 innerhalb des Netzwerks N1, eines Übertragungsprotokolls P2 innerhalb des Netzwerks N3, eines Übertragungsprotokolls P3 innerhalb des Netzwerks N4 und eines Übertragungsprotokolls P4 innerhalb des Netzwerks N2 dargestellt.

In den jeweiligen peripheren Zonen, Zone 1 und Zone 2, sind beispielhaft jeweils ein Bearbeitungs-Computersystem, Server 10 bzw. Server 11 sowie ein Vermittlungs-Computersystem, Task-Server 1 sowie Task-Server 2, eingerichtet. Beispielsweise kann eine Übertragung von Daten-Paketen von Server 10 aus Zone 1 in Richtung von Server 11 in Zone 2 initiiert werden. Hierzu werden die Daten-Pakete in einer Übertragungsrichtung D1 von Server 10 unmittelbar auf Task-Server 1 in Zone 1 übertragen. Dies geschieht via Netzwerk N1. Anschließend holt der Relay-Server 6 aus Zone 0 nach einem Port-Knocking des Task-Servers 1 hin zu Relay-Server 6 die Daten-Pakete von Task-Server 1 ab, wechselt das Übertragungsprotokoll von Protokoll P1 auf Protokoll P2 und führt ein Port-Knocking hin zu Relay-Server 5 in Zone 0 durch. Anschließend holt Relay-Server 5 über das Übertragungsprotokoll P2 innerhalb des Netzwerks N3 das Daten-Paket von Relay-Server 6 ab.

Nachdem für den Relay-Server 5 der Relay-Server 7 unmittelbar ansprechbar ist, überträgt Relay-Server 5 das Daten-Paket gemäß einem weiter gewechselten Übertragungsprotokoll P3 über das Netzwerk N4 auf Relay-Server 7. Ferner überträgt Relay-Server 7 das Daten-Paket nach einem erneuten Protokollwechsel auf ein Übertragungsprotokoll P4 vermittels des Netzwerks N2 auf den direkt ansprechbaren Task-Server 2 aus Zone 2. Task-Server 2 führt anschließend über das Netzwerk N2 ein Port-Knocking zu Server 11 durch, wobei Server 11 in einem letzten Schritt über das Netzwerk N2 den Task-Server 2 anspricht und das Daten-Paket zu sich abholt.

Figur 4 zeigt somit eine hybride Computernetz-Infrastruktur durch Verwendung hybrider Vermittlungs-Computersysteme, umfassend ansprechbare Task-Server 1 und 2, richtungsabhängig geöffnete und geschlossene (ansprechbare und nichtansprechbare) Vermittlungs-Computersysteme, Relay-Server 6 und 7 sowie ein gänzlich abgeschottetes (gänzlich nichtansprechbares) Vermittlungs-Computersystem, nämlich Relay-Server 5. Dennoch ist eine Kommunikation und Weiterleitung von Daten-Paketen ausgehend von einem Bearbeitungs-Computersystem, Server 10 oder Server 11, in einer Zone 1 bzw. 2 hin zu einem anderen Bearbeitungs-Computersystem, Server 10 oder 11 einer anderen Zone, Zone 1 oder Zone 2, möglich.

Die drei Zonen, Zone 0, 1 und 2, sind vorteilhaft räumlich getrennt und mit jeweiligen Zugangs-Sicherheitssystemen abgeriegelt. Vorteilhaft ist Zone 0 ein Bereich, der von Personal aus Zone 1 bzw. Zone 2 nicht zugänglich sein darf.

Ein mögliches Angriffs-Szenario eines Crackings (Einbruch auf EDV-Ebene in ein Computersystem aus Zone 1 oder Zone 2) wird durch mehrfach verriegelte Systeme sowie unterschiedliche Übertragungsprotokolle (jeweils für Direktübertragung und Abholung von Daten-Paketen) sehr stark erschwert. Auf der physischen Ebene ermöglichen weder der manipulative Zugriff auf das Netzwerk N1 in Zone 1 noch der Zugriff auf das Netzwerk N2 in Zone 2 Vorteile für weiterführende Angriffs-Aktionen. Ein Transport von Daten-Paketen ist (wie im Zusammenhang mit der Übertragungsrichtung D1 oben erläutert) von Server 10 zu Server 11 möglich. Der Transport in der anderen Richtung erfolgt analog.

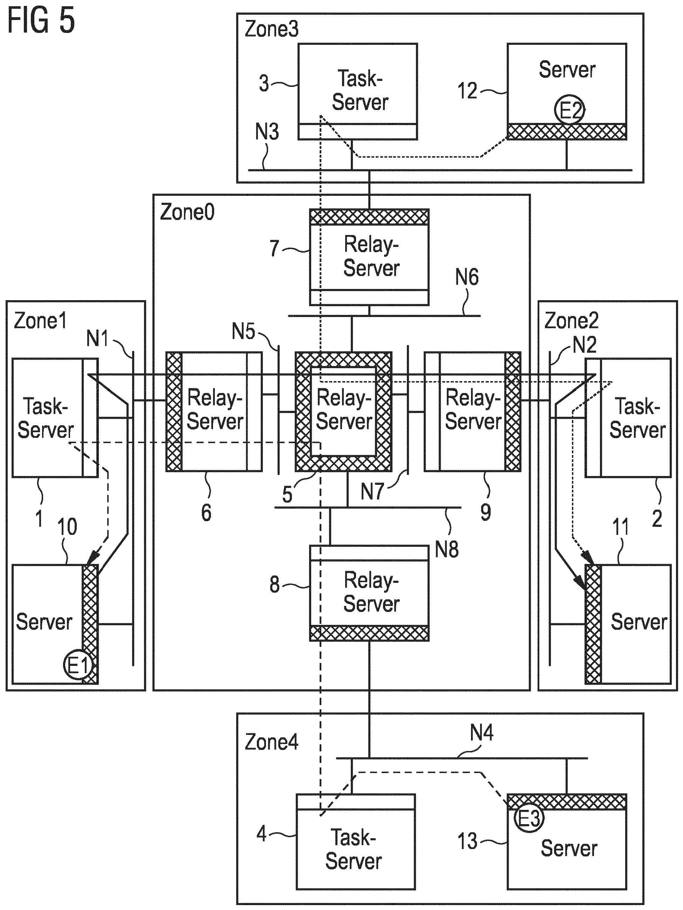

In Figur 5 ist eine Abschottung einer größeren Anzahl von Zonen exemplarisch für vier Zonen, Zone 1 bis Zone 4, gezeigt. Dargestellt ist ein Transport von Daten-Paketen von einem Server 10 in Zone 1 zu einem Server 11 in Zone 2 gemäß einem Verfahren E1, ein Transport von einem Server 12 in Zone 3 zum Server 11 in Zone 2 gemäß einem Verfahren E2 sowie ein Transport von einem Server 13 in Zone 4 zum Server 10 in Zone 1 gemäß einem Verfahren E3.

In Zone 0, welche in Figur 5 mittig angeordnet ist, sind fünf Relay-Server 5, 6, 7, 8 und 9 angeordnet, wobei Relay-Server 5 das Zentrum bildet und sämtliche Netzwerk-Ports geschlossen hält, sodass über die jeweiligen Netzwerke N5, N6, N7 und N8 keinerlei Verbindungsaufbau zum Relay-Server 5 möglich ist. Umgekehrt kann der Relay-Server 5 jedoch die anderen Relay-Server 6, 7, 8 und 9 in der Zone 0 über die entsprechenden Netzwerke ansprechen, weil die Relay-Server 6, 7, 8 und 9 in Richtung zum Relay-Server 5 hin zumindest jeweils einen für diese Zwecke geöffneten Netzwerk-Port mit einem laufenden Dienst für einen Verbindungsaufbau offen halten.

Eine Kommunikation in der Struktur gemäß Figur 5 kann somit "sternförmig" von einer peripheren Zone nach innen in Zone 0 bzw. aus der Zone 0 in die Peripherie heraus erfolgen. Daten-Pakete können beispielsweise vom Server 10 aus Zone 1 vermittels des Netzwerks N1 über den Task-Server 1 auf den Relay-Server 6 in Zone 0 transportiert werden, wobei die Daten-Pakete dann über Netzwerk N5 nach einem Port-Knocking von Relay-Server 6 auf Relay-Server 5 von letzterem abgeholt werden und entsprechend weitertransportiert werden. Gemäß einem Transportverfahren E1 von Server 10 aus würde beispielsweise ein Daten-Paket vom Relay-Server 5 auf den Relay-Server 9 via Netzwerk N7 übertragen und von Relay-Server 9 auf den Task-Server 2 in Zone 2 transportiert. Von dort kann das Daten-Paket dann durch Server 11 über das Netzwerk N2 abgeholt werden. Ein analoger Transport von Daten-Paketen gemäß den in Figur 5 dargestellten Transportrouten E2 von Server 12 in Zone 3 aus und E3 von Server 13 in Zone 4 aus erfolgt analog.

Die Verbindung der in Figur 5 exemplarisch dargestellten vier Sicherheitszonen mit einer zentralen Vermittlungszone 0 erfolgt in einem Stern, dessen Zentrum der abgeschottete Relay-Server 5 bildet. Die für Figur 4 erläuterten Aussagen bezüglich der Sicherheit gegen physische und logische Angriffe treffen bei der in Figur 5 dargestellten Konfiguration genauso zu. Eine sternförmige Konstellation gemäß Figur 5 benötigt sehr wenige Ressourcen im Vergleich zur Konfiguration gemäß Figur 4 und ermöglicht dennoch einen zufriedenstellenden Transport von Daten-Paketen zwischen unterschiedlichen Zonen 1 bis 4. Beispielsweise seien als Kandidaten für unterschiedliche Sicherheitszonen in einem Rechenzentrum ein Server in einer demilitarisierten Zone (DMZ), sonstige Server, ein Bereich für Bedienpersonal (Operator), ein Bereich für eine Hardware-Steuerung (z.B. von Racks), ein Staging usw. genannt.

Aufgrund des gänzlich abgeschotteten Relay-Servers 5, welcher das Zentrum und damit den Kern sämtlicher Übertragungswege zwischen einzelnen Zonen bildet, ist eine Sicherheit gegen ein Ausbreiten von Angriffen auf Computersysteme einzelner Zonen auf andere Sicherheitszonen gewährleistet. Wie bereits zu den vorhergehenden Figuren erläutert, bildet der Relay-Server 5 eine wesentliche Blockade gegen einen ungewollten Zugriff auf im Übertragungsweg dahinter liegende Computersysteme. Auf diese Weise wird durch ein kaskadiertes Zusammenspiel mehrerer Relay-Server innerhalb der Zone 0 ein Angriffs-Szenario deutlich erschwert bzw. unwahrscheinlicher.

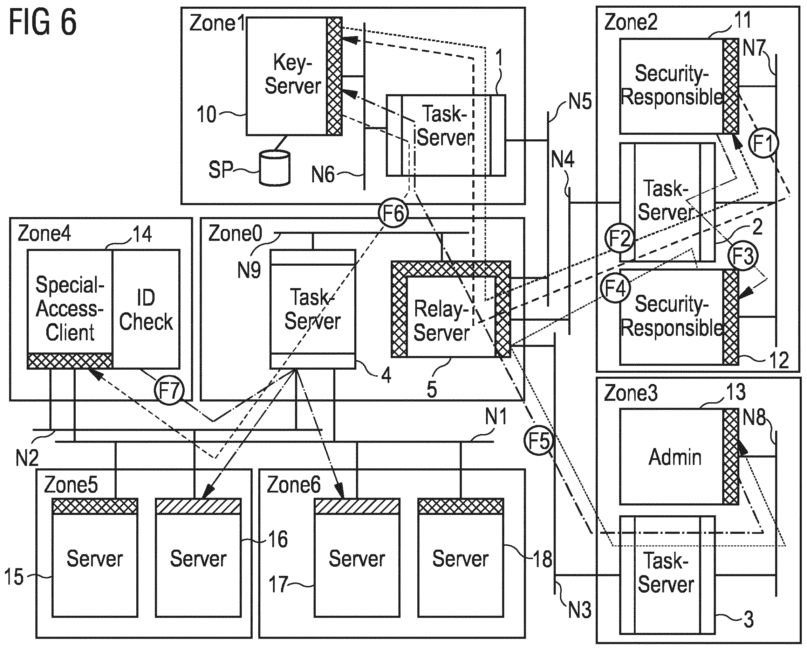

Figur 6 zeigt eine schematisierte Darstellung einer Computernetz-Infrastruktur mit unterschiedlichen Sicherheitszonen, welche vermittels einer Struktur hybrider Vermittlungs-Computersysteme, wie sie in Bezug auf die Figuren 1 bis 5 erläutert worden sind, verbunden sind.

Nachfolgend wird ein Verfahren für einen gesicherten Zugriff auf ein Bearbeitungs-Computersystem der Computernetz-Infrastruktur gemäß Figur 6 unter Anwendung einer in den vorhergehenden Figuren erläuterten Kommunikation und Weiterleitung von Daten-Paketen zwischen abgesicherten Computersystemen dargestellt.

Die Computernetz-Infrastruktur gemäß Figur 6 umfasst insgesamt sieben Sicherheitszonen, Zone 0 bis Zone 6, wobei jede Zone ein oder mehrere Bearbeitungs-Computersysteme mit gänzlich geschlossenen Netzwerk-Ports (Verhinderung eines Verbindungsaufbaus von außen) umfasst. Die Zonen 0, 1, 2 und 3 umfassen zudem jeweils zumindest ein Vermittlungs-Computersystem mit zumindest einem für diese Zwecke geöffneten Netzwerk-Port für eine Ansprechbarkeit und einen Verbindungsaufbau von außen zum Austausch von Daten-Paketen zwischen Bearbeitungs-Computersystemen innerhalb einer Sicherheitszone bzw. zum Transport von Daten-Paketen über Netzwerke in andere Sicherheitszonen. Die Zonen 4, 5 und 6 haben kein eigenes Vermittlungs-Computersystem. Diese Aufgabe übernimmt für diese Zonen das Vermittlungs-Computersystem in Zone 0. Diese Topologie ist natürlich nur beispielhaft. Es sind auch andere Konstellationen denkbar.

Computersysteme mit geschlossenen Netzwerk-Ports sind in Figur 6 ebenfalls durch kreuzschraffierte Ein-/Ausgangsebenen symbolisiert. Computersysteme mit zumindest einem geöffneten Netzwerk-Port sind durch balkenförmige Ein-/Ausgangsebenen symbolisiert. Computersysteme mit temporär selektiv geöffneten Netzwerk-Ports (Erläuterungen weiter unten) sind durch einfach schraffierte Ein-/Ausgangsebenen symbolisiert.

Eine Zone 0 ist zentral angeordnet und umfasst einen Relay-Server 5 sowie einen Task-Server 4. Der Relay-Server 5 umfasst die Funktionalität, wie sie bereits im Zusammenhang mit Relay-Servern gemäß den Figuren 1 bis 5 erläutert worden ist. Insbesondere ist der Relay-Server 5 gänzlich abgeschlossen mit geschlossenen Netzwerk-Ports, sodass ein Verbindungsaufbau über Netzwerk von außen auf Relay-Server 5 nicht möglich ist. Umgekehrt kann Relay-Server 5 jedoch von sich aus verschiedene Vermittlungs-Computersysteme (Task-Server), welche zumindest einen Netzwerk-Port mit einem laufenden Dienst offenhalten, ansprechen und einen Verbindungsaufbau dorthin initiieren. Innerhalb der Zone 0 kann Relay-Server 5 über Netzwerk N9 auf den Task-Server 4 zugreifen. Es ist denkbar, die Zone 0 in Figur 6 zur weiteren Erhöhung der Sicherheit gemäß einer Zone 0 aus Figur 5 zu realisieren. Dann wären auch die Zonen 4, 5 und 6 aus Figur 6 jeweils mit zumindest einem Vermittlungs-Computersystem auszustatten.

Die Kommunikation innerhalb der Struktur gemäß Figur 6 verläuft sternförmig von einer peripheren Sicherheitszone hin zum Zentrum (Zone 0) und von dort wiederum in die Peripherie.

Die einzelnen peripheren Sicherheitszonen werden nachfolgend erläutert.

### Zone 1:

In Zone 1 ist ein Bearbeitungs-Computersystem in Form eines Key-Servers 10 mit einem daran angebundenen Speicher SP untergebracht. Der Key-Server 10 hält sämtliche Netzwerk-Ports geschlossen und hat keinerlei laufenden Dienst oder laufende Programme für einen Verbindungsaufbau von außen eingerichtet. Der Key-Server 10 stellt eine von mehreren Sicherheits-Instanzen dar. Im Key-Server 10 sind Routing-Informationen für ein automatisiertes Routing innerhalb der Computernetz-Infrastruktur hinterlegt. Optional hält der Key-Server 10 personengebundene Sicherheitsdaten, Identifikationsdaten bzw. sonstige Schlüssel, Passwörter usw. vor. Ferner verwaltet der Key-Server 10 optional vordefinierte "Formular-Daten" zur Erstellung eines automatisierten Prozesses für einen Zugriff auf ein abgesichertes Computersystem innerhalb der Computernetz-Infrastruktur. Alternativ werden die genannten Daten während eines Routings in anderen Bearbeitungs-Computersystemen für temporäre Verwendungen generiert oder von einem Benutzer eingegeben. Sämtliche Daten können ggf. verschlüsselt sein, z.B. über eine homomorphe Verschlüsselung.

Der Key-Server 10 kann über ein Netzwerk N6 innerhalb der Zone 1 mit dem Task-Server 1 kommunizieren, um auf diesem Daten-Pakete abzulegen oder von dort abzuholen. Nach außen ist die Zone 1 über Netzwerk N5 an die Zone 0 angebunden.

### Zone 2:

Zone 2 umfasst zwei Bearbeitungs-Computersysteme, welche in Figur 6 als Security-Responsible 11 und Security-Responsible 12 deklariert sind. Diese beiden Systeme halten jeweils sämtliche Netzwerk-Ports geschlossen und sind (ähnlich zum Key-Server 10 aus Zone 1) nicht über Netzwerk erreichbar. Security-Responsible 11 und 12 sind weitere Sicherheits-Instanzen. Diese können z.B. vorbestimmte Sicherheits- oder Authentifizierungs-Dateien (vom Key-Server 10 vermittels eines Routings) zu sich abholen, lokal bearbeiten und in der Struktur weiterverteilen. Security-Responsible 11 und 12 können aber auch selbst Sicherheits- oder Authentifizierungs-Dateien generieren oder durch einen Benutzer eingebbar sein und im Prozess entlang eines Routings weiterverteilen. Security-Responsible 11 und 12 dienen beispielsweise zum Vergeben und Festlegen von Sicherheitskriterien für einen gesicherten Zugang zu einem Bearbeitungs-Computersystem innerhalb der Computernetz-Infrastruktur.

Für eine Kommunikation und Weiterleitung von Daten-Paketen sind Security-Responsible 11 und 12 über ein Netzwerk N7 innerhalb der Zone 2 an einen Task-Server 2 angebunden, welcher seinerseits zumindest einen Netzwerk-Port offen hält, sodass Security-Responsible 11 und 12 auf Task-Server 2 zugreifen können und eine Verbindung aufbauen können, um beispielsweise Daten-Pakete zu sich abzuholen. Nach außen ist Zone 2 über ein Netzwerk N4 mit Zone 0 verbunden.

### Zone 3:

In Zone 3 ist ein Bearbeitungs-Computersystem in Form eines Admin 13 eingerichtet, welcher geschlossene Netzwerk-Ports aufweist und über Netzwerk N8 an einen Task-Server 3 zum Abholen bzw. Übertragen von Daten-Paketen angebunden ist. Auch der Admin 13 stellt eine Sicherheits-Instanz dar, welche beispielsweise einen vorbestimmten Benutzerkreis von Personen für einen dedizierten Zugriff auf ein Bearbeitungs-Computersystem innerhalb der Computernetz-Infrastruktur festlegen kann. Zone 3 ist über ein Netzwerk N3 nach außen mit Zone 0 verbunden.

### Zone 4:

Zone 4 stellt gemäß Figur 6 die eigentliche Zugriffs-Zone für einen Zugriff auf ein Bearbeitungs-Computersystem dar und umfasst ein Bearbeitungs-Computersystem, nämlich einen sogenannten Special-Access-Client 14. Dieser umfasst geschlossene Netzwerk-Ports und stellt ein Zugriffs-Computersystem für einen Zugriff auf ein weiteres Bearbeitungs-Computersystem innerhalb der Computernetz-Infrastruktur dar. Der Special-Access-Client 14 kann beispielsweise ein Rechner sein, der abgesichert ist, d. h. in einem speziell geschützten Raum lokalisiert ist. Weiterhin können übliche Sicherheitsmaßnahmen (z. B. eine Dateisystem-Verschlüsselung) vorgesehen sein. Ferner kann der Special-Access-Client 14 zusätzlich durch weitere physische Sicherungsmaßnahmen vor einem unerlaubten physischen Zugriff geschützt sein. Zone 4 ist beispielhaft über ein Netzwerk N2 nach außen mit Zone 0 verbunden.

### Zone 5:

Gleichzeitig stellt das Netzwerk N2 auch eine Anbindung an Zone 5 dar, welche in Figur 6 als eine erste Server-Zone mit zwei Servern 15, 16 eingerichtet ist.

### Zone 6:

Eine weitere Server-Zone (Zone 6), beispielhaft umfassend zwei weitere Server 17, 18, ist über ein Netzwerk N1 sowohl mit Zone 0 als auch mit Zone 4 verbunden.

Die jeweiligen Server 15 bis 18 aus Zone 5 und Zone 6 bilden Bearbeitungs-Computersysteme zur lokalen Verarbeitung von vorbestimmten Daten. Beispielsweise können die Server 15 bis 18 als Datenbank-Server eingerichtet sein. Generell haben die Server 15 bis 18 in den dargestellten Netzen geschlossene Netzwerk-Ports und sind von außen nicht ansprechbar bzw. unterdrücken einen Verbindungsaufbau. Allerdings sind die Server dezidiert freischaltbar, sodass über den Special-Access-Client 14 aus Zone 4 auf selektiv geöffnete Server zugegriffen werden kann.

Beispielhaft sind solche selektiv geöffneten Server der Server 16 aus Zone 5 und der Server 17 aus Zone 6. Ein selektives Öffnen eines vorbestimmten Netzwerk-Ports ist bei diesen Servern durch eine einfach schraffierte Ein-/Ausgangsebene symbolisiert.

Nachfolgend wird anhand mehrerer Verfahrensschritte F1 bis F7 ein gesichertes Zugriffs-Verfahren auf die Server 16 und 17 der Zonen 5 und 6 vermittels des Special-Access-Clients 14 aus Zone 4 erläutert.

In einem Schritt F1 erfolgt eine Initiierung eines Tasks für einen gesicherten Zugriff auf die beiden Server 16 und 17 aus Zone 5 und 6. Hierzu sendet der Security-Responsible 11 aus Zone 2 eine Anfrage-Datei, die über das Netzwerk N7, den Task-Server 2, das Netzwerk N4, vermittels eines Port-Knockings auf Relay-Server 5 und nachfolgendes Abholen durch Relay-Server 5, sowie über das Netzwerk N5, Task-Server 1 und Netzwerk N6 auf den Key-Server 10 übertragen wird (nach einem Port-Knocking von Task-Server 1 auf Key-Server 10 und anschließendes Abholen der Anfrage-Datei von Task-Server 1 durch Key-Server 10).

Im Key-Server 10 in Zone 1 wird ein entsprechendes "Formular" mit festgelegten notwendigen Schritten für einen Zugriff auf die Server 16 und 17 aus Zone 5 und Zone 6 vermittels des Special-Access-Clients 14 in Zone 4 ausgewählt und eine entsprechende Sicherheits-Datei erstellt. Diese wird in einem Verfahrensschritt F2 vom Key-Server 10 über einen inversen Kommunikationspfad via Zone 0 zum Security-Responsible 11 in Zone 2 rückübertragen. Das Formular kann dann (ggf. automatisiert) durch den Security-Responsible 11 in Zone 2 ausgefüllt und um notwendige Sicherheits-Informationen (z.B. wer, was, wann für einen Zugriff auf die Server 16 und 17 aus Zone 5 und Zone 6 zu tun hat) ergänzt werden.

Anschließend überträgt der Security-Responsible 11 in Schritt F3 über das Netzwerk N7 und den Task-Server 2 das vorausgefüllte Formular auf den Security-Responsible 12 innerhalb der gleichen Zone 2.

Der Security-Responsible 12 kann dann die übertragene Sicherheits-Datei um weitere notwendige Sicherheits-Informationen ergänzen, den bereits eingetragenen Sicherheits-Informationen zustimmen und/oder die Sicherheits-Datei mit einem privaten Schlüssel signieren.

In einem weiteren Schritt F4 wird die ergänzte, bearbeitete und/oder signierte Sicherheits-Datei vom Security-Responsible 12 aus Zone 2 über Netzwerk N7, Task-Server 2, Netzwerk N4, Relay-Server 5 in Zone 0, Netzwerk N3, Task-Server 3 in Zone 3 und dortigem Netzwerk N8 auf den Admin 13 übertragen. In diesem Bearbeitungs-Computersystem wird die Sicherheits-Datei weiterverarbeitet. Dies umfasst beispielsweise ein weiteres Bestätigen von Sicherheits-Informationen innerhalb der Sicherheits-Datei, ein Einfügen von weiteren Zugriffs-Informationen (z. B. wer aus einer Benutzergruppe einen dezidierten Zugriff erhalten soll) usw.

Beispielsweise kann der Admin 13 anhand der übertragenen Sicherheits-Datei und darin festgelegter Zugriffs-Kriterien zwei vorbestimmte Administratoren auswählen, die einen konkreten Zugriff auf die Server 16 und 17 vermittels des Special-Access-Clients 14 erhalten sollen. Alternativ kann auch in der Sicherheits-Datei bereits eine Festlegung von berechtigten Administratoren vorgegeben sein, die durch den Admin 13 nochmals bestätigt werden muss. In diesem Fall hätte der Admin 13 keine darüber hinaus gehenden Rechte. Diese Informationen hinterlegt Admin 13 in der Sicherheits-Datei und überträgt diese in einem weiteren Schritt F5 vermittels des Netzwerks N8, des Task-Servers 3, des Netzwerks N3, des Relay-Servers 5 in Zone 0, des Netzwerks N5, des Task-Servers 1 in Zone 1 und des dortigen Netzwerks N6 auf den Key-Server 10. Im Key-Server 10 bzw. im Speicher SP sind beispielsweise biometrische Daten von potenziellen Zugriffsberechtigten gespeichert. Diese biometrischen Daten können Fingerabdrücke, Handvenen-Scans, Retina-Scans, Stimmenmuster usw., d.h. höchstpersönliche biometrische Identifikationsdaten natürlicher Personen enthalten.

Es ist jedoch auch denkbar, dass ein anderes Computersystem aus der Computernetz-Infrastruktur die Vorhaltung solcher biometrischer Daten übernimmt. Beispielhaft ist dies in Figur 6 der Key-Server 10 als eine mögliche Sicherheits-Instanz.

In Key-Server 10 werden anhand der übertragenen Sicherheits-Datei die biometrischen Daten der beiden Administratoren ausgewählt, welche durch den Admin 13 in Zone 3 für einen Zugriff ausgewählt und festgelegt worden sind. Diese biometrischen Daten werden zusammen mit oder eingebettet in die Sicherheits-Datei in einem Schritt F6 vermittels des Netzwerks N6, des Task-Servers 1, des Netzwerks N5, des Relay-Servers 5 in Zone 0, des Netzwerks N9, des Task-Servers 4 sowie des Netzwerks N2 auf den Special-Access-Client 14 in Zone 4 übertragen.

Im Special-Access-Client 14 erfolgen als weitere Maßnahmen ein Abfragen von Authentifizierungs-Informationen und ein Überprüfen dieser abgefragten Authentifizierungs-Informationen anhand der in der Sicherheits-Datei hinterlegten biometrischen Daten.

Hierzu stellt der Special-Access-Client 14 ein Terminal zur Verfügung, an dem biometrische Daten eingelesen und/oder Passwörter abgefragt werden können. Die Passwörter können beispielsweise ein weiteres Sicherheitskriterium darstellen, welches den beiden Administratoren, die einen Zugriff auf die Server 16 und 17 erhalten sollen, zuvor vermittels eines getrennten Mediums unabhängig vom hier beschriebenen System/Prozess (beispielsweise auf Papier) mitgeteilt worden sind. Auf diese Art und Weise müssen sich die beiden Administratoren nach Überwinden einer physischen Zutrittskontrolle (z.B. in einem Hochsicherheits-Rack), welche ebenfalls Authentifizierungen abverlangen kann, am Special-Access-Client 14 authentifizieren. Stimmen die abgefragten Authentifizierungs-Informationen mit den in der Sicherheits-Datei enthaltenen Informationen überein, so sind die Administratoren am Special-Access-Client 14 authentifiziert.

Für einen Zugriff auf die Server 16 und 17 in Zone 5 und 6 muss jedoch eine weitere Sicherheitshürde überwunden werden. Denn die Server 16 und 17 haben originär geschlossene Netzwerk-Ports und sind wie die Server 15 und 18 in den jeweiligen Zonen 5 und 6 nicht von außen ansprechbar, sodass kein Verbindungsaufbau zu den Servern 16 und 17 möglich ist. Für einen Zugriff auf die Server 16 und 17 ist somit ein selektives Freischalten notwendig.

Nach erfolgreicher Authentifizierung der Administratoren am Special-Access-Client 14 in Zone 4 erfolgt in Schritt F7 ein Übertragen einer Zugriffs-Anweisung vom Special-Access-Client 14 über das Netzwerk N2 auf den Task-Server 4 in Zone 0. Dieser führt über das Netzwerk N2 auf Server 16 bzw. über das Netzwerk N1 auf Server 17 ein Port-Knocking durch, sodass die Server 16 und 17 die jeweilige Zugriffs-Anweisung abholen und lokal ausführen können. Dies kann beispielsweise ein erneutes Überprüfen von Sicherheits-Informationen beinhalten.

Anschließend (im Erfolgsfall einer etwaigen erneuten Überprüfung von Sicherheits-Informationen) erfolgt in den jeweiligen Servern 16 und 17 ein Freischalten eines selektiven Netzwerk-Ports für einen Zugriff vermittels des Special-Access-Clients 14 aus Zone 4. Ein derartiger Zugriff ist vorteilhaft auf die IP-Adresse, gegebenenfalls in Verbindung mit einem bestimmten Quell-Port, des Special-Access-Clients 14 beschränkt. Ein selektiv geöffneter Netzwerk-Port an den Servern 16 und 17 ist durch eine einfach schraffierte Kommunikationsebene symbolisiert.

Anschließend können die Administratoren am Special-Access-Client 14 in Zone 4 über die Netzwerke N2 bzw. N1 auf die selektiv geöffneten Server 16 und 17 zugreifen, um dort beispielsweise Wartungsarbeiten durchzuführen, Applikationen zu überprüfen, Daten wiederherzustellen usw.

Damit ist das Zugriffs-Verfahren beendet.

Nach einem erfolgten Zugriff, welcher beispielsweise zeitlich beschränkt sein kann (Festlegen vorab, z.B. innerhalb der Sicherheits-Datei) wird der selektiv geöffnete Netzwerk-Port an den jeweiligen Servern 16 und 17 wieder geschlossen, sodass die Server 16 und 17, wie die Server 15 und 18 in den jeweiligen Zonen 5 und 6 wiederum abgeschottet sind, sodass kein Verbindungsaufbau von außen mehr möglich ist. Dies stellt den originären Zustand der Computernetz-Infrastruktur gemäß Figur 6 wieder her.

Auf diese Weise ist vermittels einer Struktur hybrider Vermittlungs-Computersysteme, welche durch einen Relay-Server 5 gegebenenfalls in mehrere Sicherheitszonen aufgeteilt ist, eine Kommunikation und Weiterleitung von Sicherheits-Dateien für einen gesicherten Zugriff auf einzelne Bearbeitungs-Computersysteme möglich.

Sämtliche dargestellten Strukturen, Topologien und Anordnungen von Computersystemen innerhalb der Computernetz-Infrastruktur gemäß den Figuren 1 bis 6 sind lediglich beispielhaft und vereinfacht dargestellt. Auf mögliche Einsatzszenarien von Firewalls und ähnlichen Systemen (z. B. sogenannte "Intrusion Detection Systems", IDS, oder "Intrusion Prevention Systems", IPS) wurde in den Darstellungen gemäß den Figuren 1 bis 6 verzichtet. Derartige Systeme sind jedoch vorteilhaft einzusetzen.

### Bezugszeichenliste:

- 1 - 4: Task-Server
- 5 - 9: Relay-Server
- 10 - 18: Bearbeitungs-Computersysteme
- A1 - A10: Verfahrensschritte
- B1, B2: Verfahrensschritte
- C1, C2: Verfahrensschritte
- D1: Verfahrensschritt
- E1 - E3: Verfahrensschritte
- F1 - F7: Verfahrensschritte
- N1 - N9: Netzwerke
- P1 - P4: Übertragungsprotokolle
- SP: Speicher
- Zone 0-Zone 6: Sicherheitszonen

## Patentansprüche

1. Verfahren zur Kommunikation zwischen abgesicherten Computersystemen in einer Computernetz-Infrastruktur, wobei Daten-Pakete zwischen mehreren aus einer Gruppe von Bearbeitungs-Computersystemen (10-18) übertragen werden und eine derartige Übertragung vermittels zumindest eines Vermittlungs-Computersystems (1-4) durchgeführt wird,
wobei die Daten-Pakete über zumindest ein Relay-System (5-9) geleitet werden, das dem Vermittlungs-Computersystem (1-4) in einem Übertragungsweg der Daten-Pakete vor- oder nachgeschaltet ist,
wobei alle aus der Gruppe der Bearbeitungs-Computersysteme (10-18) vorbestimmte, für dieses Verfahren verwendete Netzwerk-Ports dauerhaft während der Durchführung des Verfahrens derart geschlossen halten, dass kein Verbindungsaufbau von außen zugelassen wird und somit ein Zugriff auf ein jeweiliges Bearbeitungs-Computersystem (10-18) über ein Netzwerk (N1-N9) vermittels dieser Netzwerk-Ports verhindert wird, und
wobei das Relay-System (5-9) zumindest gegenüber dem Vermittlungs-Computersystem (1-4), dem das Relay-System (5-9) vor- oder nachgeschaltet ist, vorbestimmte, für dieses Verfahren verwendete Netzwerk-Ports dauerhaft während der Durchführung des Verfahrens derart geschlossen hält, dass zumindest vom Vermittlungs-Computersystem (1-4) aus kein Verbindungsaufbau zum Relay-System (5-9) zugelassen wird und somit ein entsprechender Zugriff auf das Relay-System (5-9) über ein Netzwerk (N1-N9) vermittels dieser Netzwerk-Ports verhindert wird,
wobei jedoch ein Bearbeitungs-Computersystem (10-18) oder das Relay-System (5-9) eine Verbindung zum Vermittlungs-Computersystem (1-4) aufbauen, um ein Daten-Paket im Vermittlungs-Computersystem (1-4) abzulegen oder von dort abzuholen.

2. Verfahren nach Anspruch 1, wobei das Relay-System (5-9) in einem Übertragungsweg der Daten-Pakete einem Bearbeitungs-Computersystem (10-18) unmittelbar vor- oder nachgeschaltet ist und wobei das Relay-System (5-9) zu diesem Bearbeitungs-Computersystem (10-18) hin zumindest einen Netzwerk-Port geöffnet hat, so dass dieses Bearbeitungs-Computersystem (10-18) eine Verbindung zum Relay-System (5-9) aufbauen kann, um ein Daten-Paket im Relay-System (5-9) abzulegen oder von dort abzuholen.

3. Verfahren nach Anspruch 1 oder 2, wobei die Daten-Pakete über mehrere Relay-Systeme (5-9) geleitet werden, welche in einem Übertragungsweg der Daten-Pakete unmittelbar hintereinandergeschaltet sind, und wobei zwischen jeweils zwei Relay-Systemen (5-9) eines der Relay-Systeme (5-9) gegenüber dem anderen Relay-System (5-9) zumindest einen Netzwerk-Port geöffnet hat, und wobei ein Zugriff auf dieses Relay-System (5-9) vermittels des geöffneten Netzwerk-Ports zur Weiterleitung der Daten-Pakete erfolgt.

4. Verfahren nach einem der Ansprüche 1 bis 3, wobei die Daten-Pakete
- im Übertragungsweg vor dem/einem Relay-System (5-9) anhand wenigstens eines ersten Übertragungsprotokolls (P1-P4) übertragen werden und
- im Übertragungsweg nach dem/einem Relay-System (5-9) anhand wenigstens eines zweiten Übertragungsprotokolls (P1-P4) übertragen werden, welches sich von dem wenigstens einen ersten Übertragungsprotokoll (P1-P4) unterscheidet.

5. Verfahren nach einem der Ansprüche 1 bis 4, wobei das Übertragen der Daten-Pakete auf das/ein Relay-System (5-9) oder auf ein Bearbeitungs-Computersystem (10-18) die folgenden Schritte umfasst:
- Senden einer vorbestimmten Daten-Sequenz an das Relay-System (5-9) oder an das Bearbeitungs-Computersystem (10-18), wobei die vorbestimmten Netzwerk-Ports des Relay-Systems (5-9) oder des Bearbeitungs-Computersystems (10-18) geschlossen sind und wobei die Daten-Sequenz in einer vorbestimmten Reihenfolge einen oder mehrere Netzwerk-Ports des Relay-Systems (5-9) oder des Bearbeitungs-Computersystems (10-18) anspricht,
- Überprüfen der gesendeten Daten-Sequenz auf Übereinstimmung mit einer vordefinierten Sequenz im Relay-System (5-9) oder im Bearbeitungs-Computersystem (10-18), sowie
- Veranlassen des Übertragens der Daten-Pakete durch das Relay-System (5-9) oder das Bearbeitungs-Computersystem (10-18), falls die Überprüfung der gesendeten Daten-Sequenz positiv ist, wobei das Relay-System (5-9) oder das Bearbeitungs-Computersystem (10-18) seinerseits eine Verbindung zum Vermittlungs-Computersystem (1-4) aufbaut und die Daten-Pakete abholt.

6. Verfahren nach einem der Ansprüche 1 bis 5, wobei in der Gruppe der Bearbeitungs-Computersysteme (10-18) zwischen wenigstens
- einem Key-Computersystem (10),
- einem Zugriffs-Computersystem (14) und
- einem Ziel-Computersystem (16, 17)
unterschieden wird und das Verfahren die weiteren Schritte umfasst:
- Erstellen einer Sicherheits-Datei für einen gesicherten Zugriff auf das Ziel-Computersystem (16, 17) im Key-Computersystem (10),
- Übertragen der Sicherheits-Datei entlang eines definierten Kommunikationspfades vom Key-Computersystem (10) vermittels des zumindest einen Vermittlungs-Computersystems (1-4) und des zumindest einen Relay-Systems (5-9) auf das Zugriffs-Computersystem (14),
- Überprüfen zuvor abgefragter Authentifizierungs-Informationen durch das Zugriffs-Computersystem (14) anhand der Sicherheits-Datei, sowie
- Freischalten eines selektiven Netzwerk-Ports des Ziel-Computersystems (16, 17) für einen Zugriff vermittels des Zugriffs-Computersystems (14), falls das Überprüfen der Authentifizierungs-Informationen durch das Zugriffs-Computersystem (14) erfolgreich war.

7. Verfahren nach Anspruch 6, wobei in der Gruppe der Bearbeitungs-Computersysteme (10-18) zusätzlich nach wenigstens einem Autorisierungs-Computersystem (11-13) unterschieden wird und das Verfahren die weiteren Schritte umfasst:
- Übertragen der Sicherheits-Datei auf das Autorisierungs-Computersystem (11-13),
- Ergänzen der Sicherheits-Datei um vorbestimmte Zugriffs-Informationen und/oder Signieren der Sicherheits-Datei im Autorisierungs-Computersystem (11-13) sowie
- weiteres Übertragen der Sicherheits-Datei im Kommunikationspfad hin zum Zugriffs-Computersystem (14).

8. Computernetz-Infrastruktur umfassend:
- eine Gruppe von Bearbeitungs-Computersystemen (10-18),
- zumindest ein Vermittlungs-Computersystem (1-4) und
- zumindest ein Relay-System (5-9),
wobei die Computernetz-Infrastruktur derart eingerichtet ist, dass Daten-Pakete entlang eines vorbestimmten Übertragungsweges zwischen mehreren Bearbeitungs-Computersystemen (10-18) vermittels des Vermittlungs-Computersystems (1-4) und des Relay-Systems (5-9) übertragbar sind,
wobei das Relay-System (5-9) dem Vermittlungs-Computersystem (1-4) im Übertragungsweg der Daten-Pakete vor- oder nachgeschaltet ist,
wobei alle Bearbeitungs-Computersysteme (10-18) jeweils eine Zugriffssteuereinheit aufweisen, die eingerichtet ist, vorbestimmte, für diese Maßnahmen verwendete Netzwerk-Ports dauerhaft während der Durchführung der Maßnahmen derart geschlossen zu halten, dass kein Verbindungsaufbau von außen zugelassen wird und somit ein Zugriff auf ein jeweiliges Bearbeitungs-Computersystem (10-18) über ein Netzwerk (N1-N9) vermittels dieser Netzwerk-Ports verhindert ist, und
wobei das Relay-System (5-9) eine Zugriffssteuereinheit aufweist, die eingerichtet ist, zumindest gegenüber dem Vermittlungs-Computersystem (1-4), dem das Relay-System (5-9) vor- oder nachgeschaltet ist, vorbestimmte, für diese Maßnahmen verwendete Netzwerk-Ports dauerhaft während der Durchführung der Maßnahmen derart geschlossen zu halten, dass zumindest vom Vermittlungs-Computersystem (1-4) aus kein Verbindungsaufbau zum Relay-System (5-9) zugelassen wird und somit ein entsprechender Zugriff auf das Relay-System (5-9) über ein Netzwerk (N1-N9) vermittels dieser Netzwerk-Ports verhindert ist, und
wobei die Bearbeitungs-Computersysteme (10-18) und das Relay-System (5-9) eingerichtet sind, eine Verbindung zum Vermittlungs-Computersystem (1-4) aufzubauen, um ein Daten-Paket im Vermittlungs-Computersystem (1-4) abzulegen oder von dort abzuholen.

9. Computernetz-Infrastruktur nach Anspruch 8, wobei das Relay-System (5-9) in einem Übertragungsweg der Daten-Pakete einem Bearbeitungs-Computersystem (10-18) unmittelbar vor- oder nachgeschaltet ist und wobei die Zugriffssteuereinheit des Relay-Systems (5-9) eingerichtet ist, dass das Relay-System (5-9) zu diesem Bearbeitungs-Computersystem (10-18) hin zumindest einen Netzwerk-Port geöffnet hat, so dass dieses Bearbeitungs-Computersystem (10-18) eine Verbindung zum Relay-System (5-9) aufbauen kann, um ein Daten-Paket im Relay-System (5-9) abzulegen oder von dort abzuholen.

10. Computernetz-Infrastruktur nach Anspruch 8 oder 9, umfassend mehrere Relay-Systeme (5-9), welche in einem Übertragungsweg der Daten-Pakete unmittelbar hintereinandergeschaltet sind, wobei die Zugriffssteuereinheiten der Relay-Systeme (5-9) derart eingerichtet sind, dass zwischen jeweils zwei Relay-Systemen (5-9) eines der Relay-Systeme (5-9) gegenüber dem anderen Relay-System (5-9) zumindest einen Netzwerk-Port geöffnet hat, so dass ein Zugriff auf dieses Relay-System (5-9) vermittels des geöffneten Netzwerk-Ports zur Weiterleitung der Daten-Pakete möglich ist.

11. Computernetz-Infrastruktur nach einem der Ansprüche 8 bis 10, wobei die Computernetz-Infrastruktur derart eingerichtet ist, dass Daten-Pakete im Übertragungsweg vor dem/einem Relay-System (5-9) und nach dem/einem Relay-System (5-9) anhand unterschiedlicher Übertragungsprotokolle (P1-P4) übertragbar sind.

12. Computernetz-Infrastruktur nach einem der Ansprüche 8 bis 11, wobei die Gruppe der Bearbeitungs-Computersysteme (10-18) wenigstens
- ein Key-Computersystem (10),
- ein Zugriffs-Computersystem (14) und
- ein Ziel-Computersystem (16, 17)
umfasst,
wobei das Key-Computersystem (10) eingerichtet ist, eine Sicherheits-Datei für einen gesicherten Zugriff auf das Ziel-Computersystem (16, 17) zu erstellen und entlang eines vorbestimmten Kommunikationspfades vermittels des zumindest einen Vermittlungs-Computersystems (1-4) und des zumindest einen Relay-Systems (5-9) an das Zugriffs-Computersystem (14) zu übertragen,
wobei das Zugriffs-Computersystem (14) eingerichtet ist, eine Eingabe von Authentifizierungs-Informationen am Zugriffs-Computersystem (14) abzufragen und diese Authentifizierungs-Informationen anhand der Sicherheits-Datei zu überprüfen, und wobei das Ziel-Computersystem (16, 17) eingerichtet ist, einen selektiven Netzwerk-Port für einen Zugriff auf das Ziel-Computersystem (16, 17) vermittels des Zugriffs-Computersystems (14) in Abhängigkeit eines Überprüfens der Authentifizierungs-Informationen durch das Zugriffs-Computersystem (14) freizuschalten.

13. Computernetz-Infrastruktur nach Anspruch 12, wobei die Gruppe der Bearbeitungs-Computersysteme (10-18) zusätzlich wenigstens ein Autorisierungs-Computersystem (11-13) umfasst, welches eingerichtet ist, die Sicherheits-Datei nach einem Übertragen der Sicherheits-Datei auf das Autorisierungs-Computersystem (11-13) um vorbestimmte Zugriffs-Informationen zu ergänzen und/oder die Sicherheits-Datei zu signieren, sowie die Sicherheits-Datei im Kommunikationspfad weiter zu übertragen.

14. Computernetz-Infrastruktur nach einem der Ansprüche 8 bis 13, welche eingerichtet ist, ein Verfahren nach zumindest einem der Ansprüche 1 bis 7 durchzuführen.

15. Computerprogramm-Produkt, welches eingerichtet ist, auf zumindest einem Computersystem ausgeführt zu werden und welches bei dessen Ausführung ein Verfahren nach einem der Ansprüche 1 bis 7 durchführt.

## Claims

1. Method for communication between secured computer systems in a computer network infrastructure, wherein data packets are transmitted between a plurality from a group of processing computer systems (10-18) and such a transmission is performed by means of at least one broker computer system (1-4), wherein the data packets are routed via at least one relay system (5-9), which is connected upstream or downstream of the broker computer system (1-4) in a transmission path of the data packets,
wherein all from the group of the processing computer systems (10-18) keep predetermined network ports used for this method permanently closed while performing the method in such a way that a connection establishment from the exterior is not permitted and thus access to a respective processing computer system (10-18) via a network (N1-N9) by means of these network ports is prevented, and
wherein the relay system (5-9) keeps predetermined network ports used for this method permanently closed while performing the method at least toward the broker computer system (1-4), to which the relay system (5-9) is connected upstream or downstream, in such a way that a connection establishment to the relay system (5-9) is not permitted at least from the broker computer system (1-4) and thus a corresponding access to the relay system (5-9) via network (N1-N9) by means of these network ports is prevented,
wherein however a processing computer system (10-18) or the relay system (5-9) establish a connection to the broker computer system (1-4) to store a data packet in the broker computer system (1-4) or to fetch it from there.

2. Method according to claim 1, wherein the relay system (5-9) is connected directly upstream or downstream of a processing computer system (10-18) in the transmission path of the data packets and wherein the relay system (5-9) has at least one network port open toward this processing computer system (10-18) so that this processing computer system (10-18) is capable of establishing a connection to the relay system (5-9) in order to store a data packet in the relay system (5-9) or to fetch it from there.

3. Method according to claim 1 or 2, wherein the data packets are routed via multiple relay systems (5-9), which are connected immediately one after the other in a transmission path of the data packets, and wherein between in each case two relay systems (5-9) one of the relay systems (5-9) has at least one network port open toward the other relay system, and wherein access to this relay system (5-9) is effected by means of the opened network port for forwarding the data packets.

4. Method according to one of claims 1 to 3, wherein the data packets
- are transmitted in the transmission path upstream the/a relay system (5-9) by means of at least one first transmission protocol (P1-P4), and
- are transmitted in the transmission path downstream the/a relay system (5-9) by means of at least one second transmission protocol (P1-P4), which is different from the at least one first transmission protocol (P1-P4).

5. Method according to one of claims 1 to 4, wherein the transmission of the data packets to the/a relay system (5-9) or to a processing computer system (10-18) comprises the following steps:
- sending a predetermined data sequence to the relay system (5-9) or to the processing computer system (10-18), wherein the predetermined network ports of the relay system (5-9) or of the processing computer system (10-18) are closed and wherein the data sequence addresses one or multiple network ports of the relay system (5-9) or of the processing computer system (10-18) in a predetermined order,
- verifying the sent data sequence with a predefined sequence in the relay system (5-9) or in the processing computer system (10-18), as well as
- causing the transmission of the data packets by the relay system (5-9) or by the processing computer system (10-18) if the verification of the sent data sequence is positive, wherein the relay system (5-9) or the processing computer system (10-18) per se establishes a connection to the broker computer system (1-4) and fetches the data packets.

6. Method according to one of claims 1 to 5, wherein in the group of the processing computer systems (10-18) it is discriminated between at least:
- one key computer system (10),
- one access computer system (14), and
- one target computer system (16, 17),
and the method comprises the further steps:
- generating a security file for a secured access to the target computer system (16, 17) in the key computer system (10),
- transmitting the security file from the key computer system (10) to the access computer system (14) along a defined communication path by means of the at least one broker computer system (1-4) and the at least one relay system (5-9),
- verifying authentication information requested in advance by the access computer system (14) using the security file, as well as
- unlocking a selective network port of the target computer system (16, 17) for an access by means of the access computer system (14), if the verification of the authentication information by the access computer system (14) has been successful.

7. Method according to claim 6, wherein in the group of the processing computer systems (10-18), discrimination is additionally made regarding at least one authorization computer system (11-13) and the method comprises the further steps:
- transmitting the security file to the authorization computer system (11-13),
- supplementing the security file by predetermined access information and/or signing the security file in the authorization computer system (11-13), as well as
- transmitting the security file further in the communication path toward the access computer system (14).

8. Computer network infrastructure, comprising:
- a group of processing computer systems (10-18),
- at least one broker computer system (1-4), and
- at least one relay system (5-9),
wherein the computer network infrastructure is configured in such a way that data packets are transmittable along a predetermined transmission path between multiple processing computer systems (10-18) by means of the broker computer system (1-4) and the relay system (5-9),
wherein the relay system (5-9) is connected upstream or downstream of the broker computer system (1-4) in the transmission path of the data packets,
wherein all processing computer systems (10-18) comprise in each case an access control unit, which is configured to keep predetermined network ports used for these measures permanently closed while performing these measures in such a way that a connection establishment from the exterior is not permitted and thus access to a respective processing computer system (10-18) via a network (N1-N9) by means of these network ports is prevented, and
wherein the relay system (5-9) comprises an access control unit which is configured to keep predetermined network ports used for these measures permanently closed while performing these measures at least toward the broker computer system (1-4), the relay system (5-9) connected upstream or downstream to said broker computer system (1-4), in such a way that a connection establishment to the relay system (5-9) is not permitted at least from the broker computer system (1-4) and thus a corresponding access to the relay system (5-9) via a network (N1-N9) by means of these network ports is prevented, and
wherein the processing computer systems (10-18) and the relay system (5-9) are configured to establish a connection to the broker computer system (1-4) to store a data packet in the broker computer system (1-4) or to fetch it from there.

9. Computer network infrastructure according to claim 8,
wherein the relay system (5-9) is connected immediately upstream or downstream of a processing computer system (10-18) in a transmission path of the data packets and wherein the access control unit of the relay system (5-9) is configured such that the relay system (5-9) has at least one network port open toward this processing computer system (10-18) so that this processing computer system (10-18) is capable of establishing a connection to the relay system (5-9) in order to store a data packet in the relay system (5-9) or to fetch it from there.

10. Computer network infrastructure according to claim 8 or 9, comprising multiple relay systems (5-9), which are connected directly one behind the other in a transmission path of the data packets, wherein the access control units of the relay systems (5-9) are configured in such a way that between respective two relay systems (5-9) one of the relay systems (5-9) has at least one network port open toward the other relay system (5-9), so that access to this relay system (5-9) is possible using this opened network port for the transmission of the data packets.

11. Computer network infrastructure according to one of claims 8 to 10, wherein the computer network infrastructure is configured in such a way that data packets are transmittable in the transmission path upstream the/a relay system (5-9) and downstream the/a relay system (5-9) using different transmission protocols (P1-P4).

12. Computer network infrastructure according to one of claims 8 to 11, wherein the group of the processing computer systems (10-18) comprises at least
- one key computer system (10),
- one access computer system (14), and
- one target computer system (16, 17),
wherein the key computer system (10) is configured to generate a security file for a secured access to the target computer system (16, 17) and to transmit the security file to the access computer system (14) along a predetermined communication path by means of the at least one broker computer system (1-4) and the at least one relay system (5-9),
wherein the access computer system (14) is configured to prompt input of authentication information on the access computer system (14) and to verify this authentication information using the security file, and
wherein the target computer system (16, 17) is configured to unlock a selective network port for access to the target computer system (16, 17) by means of the access computer system (14) depending on a verification of the authentication information by means of the access computer system (14).

13. Computer network infrastructure according to claim 12,
wherein the group of the processing computer systems (10-18) additionally comprises at least one authorization computer system (11-13), which is configured to supplement the security file with predetermined access information and/ or sign the security file after a transmission of the security file to the authorization computer system (11-13) as well as to transmit the security file further in the communication path.

14. Computer network infrastructure according to one of claims 8 to 13, which is configured to perform a method according to at least one of claims 1 to 7.

15. Computer program product which is configured to be executed on at least one computer system and, when executed, performs a method according to one of claims 1 to 7.

## Revendications

1. Procédé de communication entre des systèmes informatiques sécurisés dans une infrastructure de réseau d'ordinateurs, sachant que des paquets de données sont transmis entre plusieurs d'un groupe de systèmes informatiques de traitement (10-18) et une telle transmission est effectuée moyennant au moins un système informatique de médiation (1-4), sachant que les paquets de données sont dirigés via au moins un système relais (5-9) qui est installé en amont ou en aval du système informatique de médiation (1-4) dans une voie de transmission des paquets de données,
sachant que tous les systèmes informatiques de traitement (10-18) du groupe maintiennent durablement fermés des ports de réseau prédéterminés employés pour ce procédé pendant l'exécution du procédé de telle manière qu'aucun établissement de connexion de l'extérieur ne soit admis et qu'un accès à un système informatique de traitement (10-18) respectif via un réseau (N1-N9) moyennant ces ports de réseau soit ainsi empêché, et
sachant que le système relais (5-9) maintient durablement fermés, du moins par rapport au système informatique de médiation (1-4) qui est installé en amont ou en aval du système relais (5-9), des ports de réseau prédéterminés employés pour ce procédé pendant l'exécution du procédé de telle manière qu'aucun établissement de connexion au système relais (5-9) ne soit admis, du moins depuis le système informatique de médiation (1-4), et qu'un accès correspondant au système relais (5-9) via un réseau (N1-N9) moyennant ces ports de réseau soit ainsi empêché,
sachant que toutefois un système informatique de traitement (10-18) ou le système relais (5-9) établissent une connexion au système informatique de médiation (1-4) pour déposer un paquet de données dans le système informatique de médiation (1-4) ou en récupérer un à partir de celui-ci.

2. Procédé selon la revendication 1, sachant que le système relais (5-9) est installé directement en amont ou en aval d'un système informatique de traitement (10-18) dans une voie de transmission des paquets de données et sachant que le système relais (5-9) a ouvert au moins un port de réseau vers ce système informatique de traitement (10-18) de sorte que ce système informatique de traitement (10-18) puisse établir une connexion au système relais (5-9) pour déposer un paquet de données dans le système relais (5-9) ou en récupérer un à partir de celui-ci.

3. Procédé selon la revendication 1 ou 2, sachant que les paquets de données sont dirigés via plusieurs systèmes relais (5-9), lesquels sont installés directement les uns derrière les autres dans une voie de transmission des paquets de données, et sachant qu'entre respectivement deux systèmes relais (5-9) l'un des systèmes relais (5-9) a ouvert au moins un port de réseau par rapport à l'autre système relais (5-9), et sachant qu'un accès à ce système relais (5-9) a lieu moyennant le port de réseau ouvert pour l'acheminement des paquets de données.

4. Procédé selon l'une des revendications 1 à 3, sachant que les paquets de données
- sont transmis à l'aide d'au moins un premier protocole de transmission (P1-P4) dans la voie de transmission avant le/un système relais (5-9) et
- sont transmis à l'aide d'au moins un deuxième protocole de transmission (P1-P4), lequel diffère de l'au moins un premier protocole de transmission (P1-P4), dans la voie de transmission après le/un système relais (5-9).

5. Procédé selon l'une des revendications 1 à 4, sachant que la transmission des paquets de données au/à un système relais (5-9) ou à un système informatique de traitement (10-18) comprend les étapes suivantes :
- envoi d'une séquence de données prédéterminée au système relais (5-9) ou au système informatique de traitement (10-18), sachant que les ports de réseau prédéterminés du système relais (5-9) ou du système informatique de traitement (10-18) sont fermés et sachant que la séquence de données sollicite un ou plusieurs ports de réseau du système relais (5-9) ou du système informatique de traitement (10-18) dans un ordre prédéterminé,
- vérification de la séquence de données envoyée en termes de concordance avec une séquence prédéfinie dans le système relais (5-9) ou dans le système informatique de traitement (10-18), ainsi que
- déclenchement de la transmission des paquets de données par le système relais (5-9) ou le système informatique de traitement (10-18) dans le cas où la vérification de la séquence de données envoyée est positive, sachant que le système relais (5-9) ou le système informatique de traitement (10-18) établit de son côté une connexion au système informatique de médiation (1-4) et récupère les paquets de données.

6. Procédé selon l'une des revendications 1 à 5, sachant que dans le groupe des systèmes informatiques de traitement (10-18) une distinction est établie entre au moins
- un système informatique clé (10),
- un système informatique d'accès (14) et
- un système informatique cible (16, 17) et le procédé comprend les étapes suivantes :
- création d'un fichier de sécurité pour un accès sécurisé au système informatique cible (16, 17) dans le système informatique clé (10),
- transmission du fichier de sécurité le long d'un chemin de communication défini depuis le système informatique clé (10) moyennant l'au moins un système informatique de médiation (1-4) et l'au moins un système relais (5-9) au système informatique d'accès (14),
- vérification par le système informatique d'accès (14) d'informations d'authentification consultées préalablement à l'aide du fichier de sécurité, ainsi que
- activation d'un port de réseau sélectif du système informatique cible (16, 17) pour un accès moyennant le système informatique d'accès (14) dans le cas où la vérification des informations d'authentification par le système informatique d'accès (14) était concluante.

7. Procédé selon la revendication 6, sachant que dans le groupe des systèmes informatiques de traitement (10-18) une distinction est en outre faite selon au moins un système informatique d'autorisation (11-13) et le procédé comprend les étapes supplémentaires :
- transmission du fichier de sécurité au système informatique d'autorisation (11-1),
- ajout au fichier de sécurité d'informations d'accès prédéterminées et/ou signature du fichier de sécurité dans le système informatique d'autorisation (11-13) ainsi que
- poursuite de la transmission du fichier de sécurité dans le chemin de communication vers le système informatique d'accès (14).

8. Infrastructure de réseau d'ordinateurs comprenant :
- un groupe de systèmes informatiques de traitement (10-18),
- au moins un système informatique de médiation (1-4) et
- au moins un système relais (5-9),
sachant que l'infrastructure de réseau d'ordinateurs est configurée de telle manière que des paquets de données soient transmissibles le long d'une voie de transmission prédéterminée entre plusieurs systèmes informatiques de traitement (10-18) moyennant le système informatique de médiation (1-4) et le système relais (5-9),
sachant que le système relais (5-9) est installé en amont ou en aval du système informatique de médiation (1-4) dans la voie de communication des paquets de données,
sachant que tous les systèmes informatiques de traitement (10-18) présentent respectivement une unité de commande d'accès qui est configurée pour maintenir durablement fermés des ports de réseau prédéterminés employés pour ces mesures pendant l'exécution des mesures de telle manière qu'aucun établissement de connexion de l'extérieur ne soit admis et qu'un accès à un système informatique de traitement (10-18) respectif via un réseau (N1-N9) moyennant ces ports de réseau soit ainsi empêché, et
sachant que le système relais (5-9) présente une unité de commande d'accès qui est configurée pour maintenir durablement fermés, du moins par rapport au système informatique de médiation (1-4) qui est installé en amont ou en aval du système relais (5-9), des ports de réseau prédéterminés employés pour ces mesures pendant l'exécution des mesures de telle manière qu'aucun établissement de connexion au système relais (5-9) ne soit admis, du moins depuis le système informatique de médiation (1-4), et qu'un accès correspondant au système relais (5-9) via un réseau (N1-N9) moyennant ces ports de réseau soit ainsi empêché, et
sachant que les systèmes informatiques de traitement (10-18) et le système relais (5-9) sont configurés pour établir une connexion au système informatique de médiation (1-4) pour déposer un paquet de données dans le système informatique de médiation (1-4) ou en récupérer un à partir de celui-ci.

9. Infrastructure de réseau d'ordinateurs selon la revendication 8, sachant que le système relais (5-9) est directement installé en amont ou en aval d'un système informatique de traitement (10-18) dans une voie de communication des paquets de données et sachant que l'unité de commande d'accès du système relais (5-9) est configurée pour que le système relais (5-9) ait ouvert au moins un port de réseau vers ce système informatique de traitement (10-18) de telle sorte que ce système informatique de traitement (10-18) puisse établir une connexion au système relais (5-9) pour déposer un paquet de données dans le système relais (5-9) ou en récupérer un à partir de celui-ci.

10. Infrastructure de réseau d'ordinateurs selon la revendication 8 ou 9, comprenant plusieurs systèmes relais (5-9), lesquels sont installés directement les uns derrière les autres dans une voie de communication des paquets de données, sachant que les unités de commande d'accès des systèmes relais (5-9) sont configurés de telle manière qu'entre respectivement deux systèmes relais (5-9) l'un des systèmes relais (5-9) ait ouvert au moins un port de réseau par rapport à l'autre système relais (5-9) de telle sorte qu'un accès à ce système relais (5-9) soit possible moyennant le port de réseau ouvert pour l'acheminement des paquets de données.

11. Infrastructure de réseau d'ordinateurs selon l'une des revendications 8 à 10, sachant que l'infrastructure de réseau d'ordinateurs est configurée de telle manière que des paquets de données soient transmissibles à l'aide de protocoles de transmission (P1-P4) différents dans la voie de communication avant le/un système relais (5-9) et après le/un système relais (5-9).

12. Infrastructure de réseau d'ordinateurs selon l'une des revendications 8 à 11, sachant que le groupe des systèmes informatiques de traitement (10-18) comprend au moins
- un système informatique clé (10),
- un système informatique d'accès (14) et
- un système informatique cible (16, 17),
sachant que le système informatique clé (10) est configuré pour créer un fichier de sécurité pour un accès sécurisé au système informatique cible (16, 17) et le transmettre au système informatique d'accès (14) le long d'un chemin de communication prédéterminé moyennant l'au moins un système informatique de médiation (1-4) et l'au moins un système relais (5-9),
sachant que le système informatique d'accès (14) est configuré pour consulter une saisie d'informations d'authentification au niveau du système informatique d'accès (14) et vérifier ces informations d'authentification à l'aide du fichier de sécurité, et sachant que le système informatique cible (16, 17) est configuré pour activer un port de réseau sélectif pour un accès au système informatique cible (16, 17) moyennant le système informatique d'accès (14) en fonction d'une vérification des informations d'authentification par le système informatique d'accès.

13. Infrastructure de réseau d'ordinateurs selon la revendication 12, sachant que le groupe des systèmes informatiques de traitement (10-18) comprend en outre au moins un système informatique d'autorisation (11-13), lequel est configuré pour compléter le fichier de sécurité après une transmission du fichier de sécurité au système informatique d'autorisation (11-13) avec des informations d'accès prédéterminées et/ou signer le fichier de sécurité, ainsi que poursuivre la transmission du fichier de sécurité dans le chemin de communication.

14. Infrastructure de réseau d'ordinateurs selon l'une des revendications 8 à 13, lequel est configuré pour effectuer un procédé selon au moins l'une des revendications 1 à 7.

15. Produit de programme informatique, lequel est configuré pour être exécuté sur au moins un système informatique et lequel effectue lors de son exécution un procédé selon l'une des revendications 1 à 7.
